(19) Europäisches Patentamt
European Patent Office
Office européen des brevets

(11) **EP 3 901 087 A1**

(12) **EUROPÄISCHE PATENTANMELDUNG**

(43) Veröffentlichungstag:
**27.10.2021   Patentblatt 2021/43**

(51) Int Cl.:
*C01B 3/04* (2006.01)          *C01B 3/06* (2006.01)
*C01B 13/02* (2006.01)         *C01B 32/40* (2017.01)
*C25B 1/00* (2021.01)          *C25C 1/00* (2006.01)

(21) Anmeldenummer: **21169078.9**

(22) Anmeldetag: **19.04.2021**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **20.04.2020   DE 102020110633**

(71) Anmelder: **Deutsches Zentrum für Luft- und Raumfahrt e.V.**
**53227 Bonn (DE)**

(72) Erfinder:
• **Vieten, Josua**
**81477 München (DE)**
• **Venstrom, Luke**
**Valparaiso, IN Indiana 46383 (US)**
• **Pein, Mathias**
**50676 Köln (DE)**
• **Roeb, Martin**
**53639 Königswinter (DE)**
• **Sattler, Christian**
**53225 Bonn (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(54) **VERFAHREN UND APPARATUR ZUR ELEKTROCHEMISCH UNTERSTÜTZTEN THERMO-CHEMISCHEN SPALTUNG VON WASSER UND KOHLENDIOXID**

(57)     Die vorliegende Erfindung betrifft ein Verfahren sowie Vorrichtungen zur Gewinnung von Wasserstoff aus Wasser und/oder Kohlenstoffmonoxid aus Kohlenstoffdioxid, wobei die für die Spaltung des Wassers und/oder Kohlenstoffdioxids benötigte Energie sowohl als elektrische Energie als auch in Form von Wärmeenergie bereitgestellt wird, wobei der Anteil an Wärmeenergie 20% bis 80% des Gesamtenergiebedarfs beträgt.

Fig. 1

**Beschreibung**

Die vorliegende Erfindung betrifft ein Verfahren sowie Vorrichtungen zur Gewinnung von Wasserstoff aus Wasser und/oder Kohlenstoffmonoxid aus Kohlenstoffdioxid, wobei die für die Spaltung des Wassers und/oder Kohlenstoffdioxids benötigte Energie sowohl als elektrische Energie als auch in Form von Wärmeenergie bereitgestellt wird, wobei der Anteil an Wärmeenergie 20% bis 80% des Gesamtenergiebedarfs beträgt.

Wasserstoff ist ein enorm wichtiger Rohstoff in der chemischen Industrie. Sowohl in der Herstellung organischer Chemikalien als auch in der Aufbereitung von Erzen und Herstellung reiner Metalle spielt Wasserstoff eine enorm wichtige Rolle. Zudem kann in der Zukunft Wasserstoff als Energieträger eine noch größere Rolle spielen, sei es zur Speicherung von Energie oder zur Anwendung im Verkehr. Derzeit wird Wasserstoff zu über 95% aus fossilen Quellen hergestellt, vor allem durch Dampfreformierung. Dabei entstehen hohe $CO_2$-Emissionen.

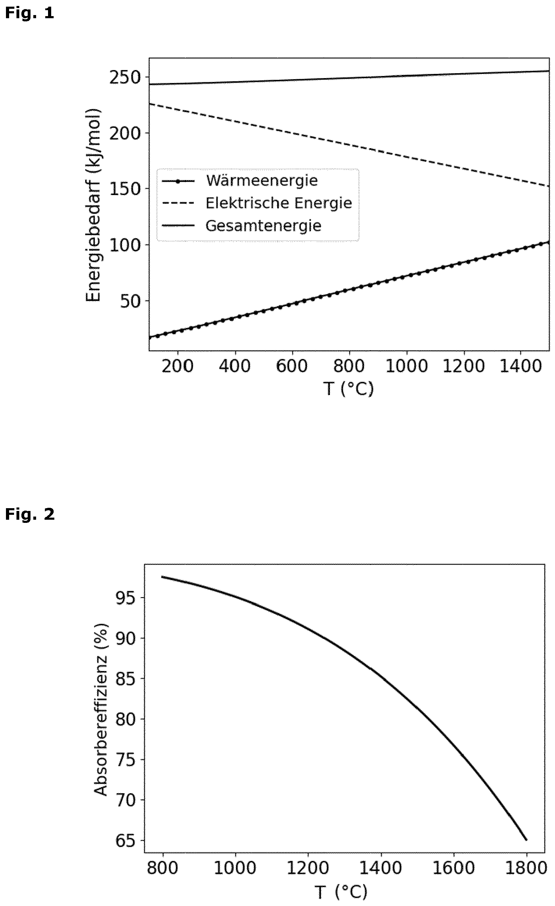

Alternativ kann Wasserstoff auch durch Elektrolyse hergestellt werden. Dies wird vor allem in jüngster Zeit durch Firmen wie Nel ASA in Norwegen vorangetrieben, wo kostengünstig Strom aus erneuerbaren Quellen zur Verfügung steht. Neben der Elektrolyse bei Raumtemperatur gibt es auch die Möglichkeit, die Elektrolyse bei höheren Temperaturen zu betreiben (Hochtemperaturelektrolyse), um einen Teil der benötigten Energie als Wärme zuzuführen. Bei höheren Temperaturen ist die zur Elektrolyse benötigte Spannung geringer und in diesem Fall damit auch der Bedarf an elektrischer Energie (siehe Fig. 1). Dies ermöglicht einen stärkeren Einsatz von Wärmeenergie, welche in der Regel günstiger als elektrischer Strom zur Verfügung gestellt werden kann. Der Anteil an Wärmeenergie am Gesamtenergiebedarf ist dabei begrenzt durch die maximale Temperatur. Durch elektrische Widerstände und andere Prozesse entstehende Abwärme wird dabei auch vollständig zur Elektrolyse verwendet. Dadurch liegt der Wirkungsgrad eines Hochtemperaturelektrolysesystems theoretisch bei 100 %.

Fig. 1 zeigt exemplarisch den Energiebedarf bei der Hochtemperaturelektrolyse (in kJ/mol $H_2$) in Abhängigkeit von der Temperatur, wie er von Ebbesen et al. (Ebbesen et al.; High Temperature Electrolysis In Alkaline Cells, Solid Proton Conducting Cells, and Solid Cells; Chem. Rev. 2014, 141, 21, 10697-10734) beschrieben wird. Mit steigender Temperatur steigt der Anteil an Wärmeenergie am gesamten Energiebedarf. Temperaturen über 900 °C werden derzeit aufgrund der begrenzten Stabilität der verwendeten Materialien nicht eingesetzt. Verdampfungswärme des Wassers nicht berücksichtigt.

Eine andere Methode der Wasserstoffherstellung ist die thermochemische Wasserspaltung. Es existieren unterschiedliche Varianten dieses Prozesses, diese haben jedoch gemeinsam, dass eines oder mehrere Redoxmaterialien als Sauerstoffträger verwendet werden, und das Wassermolekül durch Abgabe von Sauerstoff an ein solches Material gespalten wird, so dass Wasserstoff übrigbleibt. In vielen Fällen ist das Redoxmaterial ein Metalloxid. Die dafür verwendeten Metalle müssen unterschiedliche Oxidationsstufen aufweisen können (multivalente Metalle) und sich dadurch reversibel reduzieren beziehungsweise oxidieren lassen.

In einem zweistufigen thermochemischen Wasserspaltprozess wird beispielsweise ein Metalloxid (MO) zunächst thermisch reduziert, so dass das reduzierte Metalloxid $MO_{red}$ entsteht und Sauerstoff frei wird:

$$MO \rightarrow MO_{red} + O_2 \qquad (I)$$

Dieses reduzierte Metalloxid vermag dann bei niedrigeren Temperaturen, den freigesetzten Sauerstoff wieder aufzunehmen. Ist die Sauerstoffaffinität von $MO_{red}$ hoch genug, so kann auch Wasser ($H_2O$) gespalten werden, so dass Wasserstoff ($H_2$) frei wird:

$$MO_{red} + H_2O \rightarrow MO + H_2 \qquad (II)$$

Dabei entsteht wieder das ursprüngliche Metalloxid (MO).

Die Reduktion des Metalloxids (I) erfolgt typischerweise bei Temperaturen von 1300 bis 1700 °C. Erst dann wird in der Regel ein nennenswerter Reduktionszustand erreicht. Oft ist es auch zusätzlich notwendig, den entstehenden Sauerstoff kontinuierlich zu entfernen, beispielsweise unter Einsatz von Vakuumpumpen. So wird der Sauerstoffpartialdruck während der Reduktion niedrig gehalten (typischerweise zwischen 0.001 und 1 mbar) und die thermodynamische Triebkraft für die Reduktion ist ausreichend.

Die Oxidation (II) findet bei Temperaturen statt, die in der Regel circa 200 bis 700 °C unter der Reduktionstemperatur liegen. Damit Wasser gespalten werden kann, muss die Redoxenthalpie der Oxidation mit Sauerstoff hoch genug sein beziehungsweise muss die freie Gibbs-Energie des Oxidationsprozesses mit Wasser kleiner Null sein. Nur dann findet spontan eine Reaktion statt. Es stellt sich jedoch immer ein Gleichgewicht ein zwischen Wasserstoff und Wasser. Je stärker die Triebkraft der Oxidationsreaktion ist, desto mehr liegt dieses auf der Seite des Wasserstoffs. Damit Wasser in signifikantem Umfang gespalten wird, muss also die Bindung des Metalloxids an den Sauerstoff sehr stark sein. Dies bedeutet jedoch auch, dass sich MO nur sehr schwer zu $MO_{red}$ reduzieren lässt, was die sehr hohe Reduktionstemperatur und den erforderlichen niedrigen Sauerstoffpartialdruck erklärt.

Ein Beispiel für ein sehr schwer reduzierbares Metalloxid mit sehr guten Wasserspalteigenschaften ist Ceroxid ($CeO_2$). Andere Materialien können auch eingesetzt werden, zum Beispiel Perowskite. Viele dieser Materialien sind leichter reduzierbar (bei niedrigeren Temperaturen), aber weisen dann bei der Oxidation im chemischen Gleichgewicht ein recht niedriges Verhältnis von gebildetem Wasserstoff zu Wasser auf. Bei der Auswahl der Metalloxide für zweistufige thermochemische Wasserspaltzyklen ist also zwischen diesen beiden Rahmenbedingungen abzuwägen.

Die oben beschriebenen Redoxzyklen stellen eine Methode dar, um Wärmeenergie in chemisch gebundene Energie (in Form von Wasserstoff) umzuwandeln. Die Wärmequelle ist dabei für die chemische Reaktion irrelevant. Eine besonders umwelt- und klimafreundliche Möglichkeit ist die Verwendung von konzentrierter Solarenergie zur Beheizung des Redoxmaterials. Dabei wird Sonnenstrahlung mit Hilfe von Spiegeln (Heliostaten) auf einen kleinen Bereich fokussiert, der sich in der Regel auf einem so genannten Solarturm befindet. Im Fokus der konzentrierenden Solaranlage entstehen so sehr hohe Temperaturen. Die konzentrierte Strahlung kann in einem Solarreceiver aufgefangen werden und dabei zur Reduktion des Metalloxids verwendet werden (beispielsweise im Forschungsprojekt Sun2Liquid verwirklicht, sowie auf einem Dach der ETH Zürich in Zusammenarbeit mit dem Spin-Off-Unternehmen Synhelion).

So wird Solarenergie in Form von Wasserstoff chemisch gespeichert. Der Vorteil dieser Technologie ist die direkte Nutzung von solarer Wärme zur Wasserspaltung, ohne dass vorher die (verlustreiche) Umwandlung von Solarenergie in elektrischen Strom erforderlich ist. Theoretisch sind so sehr hohe Wirkungsgrade weit über 40 bis 50 % erreichbar. Aufgrund zahlreicher Wärmeverluste und technischer Herausforderungen wurden diese hohen Wirkungsgrade bisher jedoch noch nie erreicht. In Elektrolyseanlagen werden dagegen vergleichsweise hohe Wirkungsgrade erreicht, jedoch in Bezug auf die eingesetzte elektrische Energie. Betrachtet man bei der Verwendung von Solarenergie den Wirkungsgrad von Solarenergie zu chemischer Energie, so kommen die hohen Verluste von Photovoltaikzellen beziehungsweise solar betriebenen Dampfkraftwerken zum Tragen.

Idealerweise würde daher ein Teil der Energie als Wärme zugeführt, ein Teil als elektrischer Strom. Dies ist in gewissem Umfang mit Hochtemperaturelektrolyse möglich, wobei hier der Anteil an Wärmeenergie an der gesamten Energiebilanz begrenzt ist.

Es existiert derzeit kein hybridisierter Prozess, welcher die Vorteile der Elektrolyse und thermochemischen Wasserspaltung so kombiniert, dass sich der Anteil der Wärmeenergie am gesamten Energiebedarf so einstellen lässt, dass der Gesamtwirkungsgrad maximiert beziehungsweise die Gesamtkosten pro kg Wasserstoff minimiert werden.

Bei der Hochtemperaturelektrolyse nach Stand der Technik ist der Anteil an Wärmeenergie am Gesamtenergiebedarf stark begrenzt (siehe auch Fig. 1). Es kann so nur circa maximal ein Viertel der benötigten Energie als Wärme zur Verfügung gestellt werden. Nur bei sehr hohen Temperaturen wäre der Wärmeenergieanteil deutlich höher. Dadurch muss der Großteil der Energie relativ teuer mit elektrischem Strom zur Verfügung gestellt werden. Ein weiterer Nachteil der Hochtemperaturelektrolyseverfahren ist die Brüchigkeit der verwendeten Membranen bei hoher Temperatur. So ergibt sich ein Sicherheitsrisiko. Bricht die Membran, so kann ein Kurzschluss entstehen und oder Wasserstoff und Sauerstoff kommen in Kontakt. Dies kann zu Bränden oder Explosionen führen. Die Stabilität der Membran könnte gegebenenfalls durch Materialentwicklung und Absenkung der Temperatur erhöht werden. Letzteres würde jedoch zu einem niedrigeren Anteil an Wärmeenergie und somit zu höheren Kosten führen.

Bei thermochemischen Kreisprozessen nach Stand der Technik ist der Anteil der Wärmeenergie am Gesamtenergiebedarf sehr hoch. Lediglich Pumpen zur Erzeugung des Vakuums oder Luftzerlegungssysteme zur Bereitstellung von Inertgas sind in der Regel elektrisch betrieben. Dadurch ergibt sich ein hoher Anteil an Wärmeenergie am Gesamtenergiebedarf, meist 80 % oder mehr.

Für einen hohen Wirkungsgrad ist jedoch eine Reduktionstemperatur von 1500 bis 1800 °C notwendig. Durch die hohe Reduktionstemperatur entstehen enorme technische Herausforderungen. Es müssen keramische Hochtemperaturmaterialien eingesetzt werden wie beispielsweise Siliciumcarbid. Dies steigert die Investitionskosten enorm. Außerdem stellt die direkte Bestrahlung des Reaktors mit konzentrierter Solarenergie eine Herausforderung dar, da Teile des Reaktors überhitzen können, wie beispielsweise das Quarzglasfenster, welches diesen von der Umgebungsatmosphäre trennt. Eine indirekte Beheizung des Materials ist aber in der Regel nur bei niedrigeren Temperaturen möglich.

Der Einsatz sehr hoher Temperaturen führt auch zu einer verminderten Effizienz des Solarabsorbers. Durch Strahlung bei hoher Temperatur entstehen Rückstrahlverluste. Diese können bei sehr hohen Temperaturen erheblich sein (siehe Fig. 2).

Fig. 2 zeigt die theoretische solare Absorbereffizienz in Abhängigkeit der Temperatur bei einer Normalstrahl-Insolation I = 1000 W/m$^2$ und einem Konzentrationsfaktor von C = 3000, wie sie von Zedtwitz et al. (Zedtwitz et al.; The solar thermal gasification of coal - energy conversion efficiency and CO2 mitigation potential; Energy 2003, 28, 441-456) und Muhich et al. (Muhich et al.; Comparing the solar-to-fuel energy conversion efficiency of ceria and perovskite based thermochemical redox cycles for splitting H2O and CO2; Int. J. Hydrog. Energy 2018, 41, 18814-18831) beschrieben wurde.

Des Weiteren ist der Anteil an Wärmeenergie bei thermochemischen Kreisprozessen zwar hoch, jedoch ist der Gesamtenergiebedarf heute nach Stand der Technik deutlich höher als bei der Elektrolyse. Durch den zweistufigen Redoxprozess entstehen hohe Verluste. Eine große Menge an Redoxmaterial muss zunächst stark erhitzt werden. Diese Wärme wird zwar beim Abkühlen wieder frei, kann jedoch nicht vollständig wieder genutzt werden. Es können keine klassischen Wärmetauscher eingesetzt werden, da es sich um Feststoffe handelt. Zudem dürfen reduzierte und oxidierte Partikel nicht miteinander in Kontakt kommen oder in der gleichen Atmosphäre vorhanden sein, da sonst durch den Gasaustausch die Reduktion rückgängig gemacht würde. Aufgrund dieser technischen Schwierigkeiten übersteigt die Wärmerückgewinnungseffizienz in solchen Prozessen nicht 50 bis 60 %. Dadurch steigt der Gesamtenergiebedarf pro kg erzeugtem Wasserstoff stark an, vor allem bedingt durch den Aufwand an sensibler Wärme. Bei einer Wärmerückgewinnungseffizienz von 60 % beträgt alleine der Bedarf an sensibler Wärme pro kg Wasserstoff je nach Reaktionsbedingungen das Drei- bis Zehnfache des Gesamtenergiebedarfs der Elektrolyse, wie von Vieten et al. (Vieten et al.; Materials design of perovskite solid solutions for thermochemical applications; Energy Environ. Sci. 2019, 12, 1369-1384) gezeigt wird. In der Praxis wurden daher bisher keine Wirkungsgrade oberhalb des einstelligen Prozentbereichs erreicht. Mit klassischen thermochemischen Kreisprozessen ist dies aufgrund der genannten Schwierigkeiten auch nur schwer möglich, wobei verschiedene Optionen zur Verbesserung des Wirkungsgrads durch Material- und Prozessentwicklung Gegenstand aktueller Forschung sind.

Zusammenfassend lässt sich also sagen, dass die Hochtemperaturelektrolyse zwar sehr hohe Wirkungsgrade von elektrischem Strom zu chemisch gespeicherter Energie ermöglicht, allerdings trotzdem hauptsächlich auf den recht teuren Energieträger Strom angewiesen ist, welcher aus Sonnenenergie nur mit begrenztem Wirkungsgrad erzeugt werden kann. Zweistufige thermochemische Kreisprozesse ermöglichen zwar die direkte Nutzung von Wärmeenergie, allerdings muss diese Energie bei sehr hoher Temperatur bereitgestellt werden, was entsprechende Anlagen aufwändig und teuer macht. Zudem führt die geringe Wärmerückgewinnungseffizienz nach Stand der Technik zu einem deutlich höheren Gesamtenergiebedarf pro kg Wasserstoff.

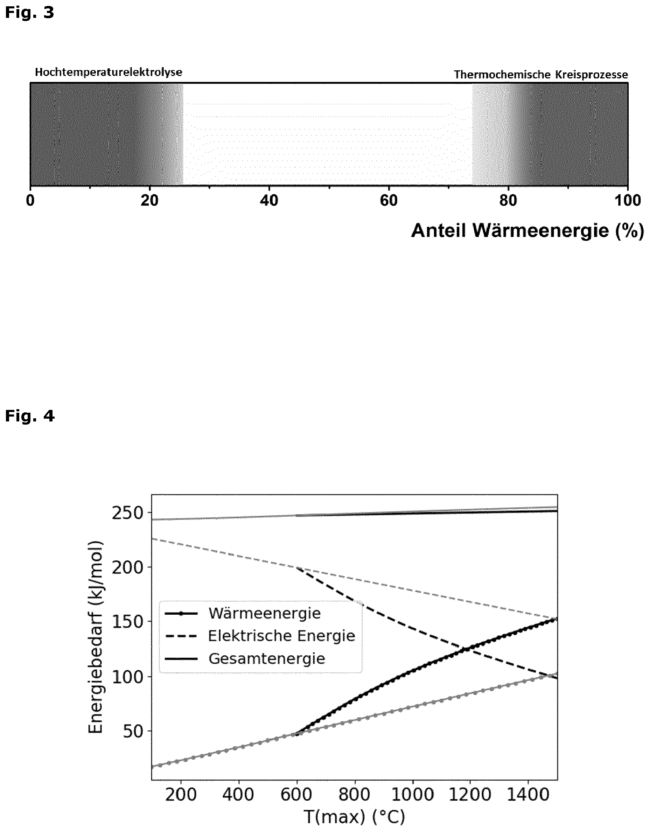

In Fig. 3 ist der Anteil der Wärmeenergie am Gesamtenergiebedarf der Wasserstofferzeugung bei Hochtemperaturelektrolyse und thermochemischen Kreisprozessen nach Stand der Technik dargestellt. Der restliche Teil der Energie wird als elektrischer Strom zugeführt (bei thermochemischen Kreisprozessen als Vakuum-Pumpenergie, bei der Hochtemperaturelektrolyse durch elektrische Spannung als Triebkraft für die Reaktion). Der weiß markierte Bereich ist nach Stand der Technik nicht zugänglich. Der Gesamtenergiebedarf pro kg Wasserstoff ist bei thermochemischen Kreisprozessen in der Regel höher als bei der Hochtemperaturelektrolyse. Außerdem sind die Kosten für den Hochtemperaturreaktor bei thermochemischen Kreisprozessen sehr hoch.

Die dargestellten Prozesse der Elektrolyse und der thermochemischen Spaltung von Wasser lassen sich in analoger Weise zur Spaltung weiterer oxidischer Verbindungen einsetzen, insbesondere zur Spaltung von Kohlenstoffdioxid. Bei der Spaltung von Kohlenstoffdioxid entstehen insbesondere Kohlenstoffmonoxid und Sauerstoff. Kohlenstoffmonoxid lässt sich insbesondere als Bestandteil von Synthesegas zusammen mit erzeugtem Wasserstoff zur Synthese von Kohlenwasserstoffen einsetzen. Derzeit wird Kohlenstoffmonoxid beispielsweise durch Kohlevergasung oder Dampfreformierung industriell hergestellt. Von Vorteil wäre es, einen einfachen zur Herstellung von Wasserstoff verwendeten Prozess auch zur direkten Spaltung von Kohlenstoffdioxid einsetzen zu können. Auf diese Weise könnte beispielsweise direkt Synthesegas hergestellt werden.

Der vorliegenden Erfindung liegt die allgemeine Aufgabe zugrunde, verbesserte Verfahren und Vorrichtungen zur Spaltung von Wasser beziehungsweise Kohlenstoffdioxid zur Gewinnung von Wasserstoff beziehungsweise Kohlenstoffmonoxid bereitzustellen, die sich insbesondere gegenüber den zuvor beschriebenen Verfahren der thermochemischen Kreisprozesse und der Hochtemperaturelektrolyse aus dem Stand der Technik durch eine verbesserte Effizienz und geringere Verfahrenstemperaturen auszeichnen.

Thermochemische Kreisprozesse basieren auf dem chemischen Potential $\mu_{chem}$ als Triebkraft, während die Triebkraft der Hochtemperaturelektrolyse vor allem das elektrische Potential U bzw. $\mu_{elec}$ ist. Mit konzentrierender Solarenergie kann Hochtemperaturwärme im Jahr 2020 zu Kosten von circa 1 €ct/kWh erzeugt werden, während mit Photovoltaik elektrischer Strom zu Kosten von circa 2 €ct/kWh erzeugt werden kann.

Insbesondere liegt der Erfindung die Aufgabe zugrunde, im Sinne einer Minimierung der Wasserstofferzeugungskosten chemisches und elektrisches Potential so kombinieren, dass der Gesamtenergiebedarf ähnlich zum Gesamtenergiebedarf der Hochtemperaturelektrolyse ist, der Anteil an Wärmeenergie am Gesamtenergiebedarf jedoch höher als bei der Hochtemperaturelektrolyse nach Stand der Technik.

In einer ersten Ausführungsform wird die erfindungsgemäße Aufgabenstellung gelöst durch ein Verfahren zur Gewinnung von Wasserstoff aus Wasser und/oder Kohlenstoffmonoxid aus Kohlenstoffdioxid, wobei die für die Spaltung des Wassers und/oder Kohlenstoffdioxids benötigte Energie sowohl in Form von Wärmeenergie als auch als elektrische Energie bereitgestellt wird, wobei der Anteil an Wärmeenergie 20% bis 80% des Gesamtenergiebedarfs beträgt.

Das erfindungsgemäße Verfahren umfasst die folgenden Schritte:

    i. Reduktion eines sauerstoffhaltigen Redoxmaterials bei einer ersten Temperatur $T_{red}$ unter Bildung von Sauerstoff, gegebenenfalls unterstützt durch eine elektrische Spannung, welche die Sauerstoffionenleitung antreibt,
    ii. Oxidation des Redoxmaterials bei einer zweiten Temperatur $T_{ox}$ durch Reaktion mit Wasser und/oder Kohlenstoffdioxid unter Bildung von Wasserstoff und/oder Kohlenstoffmonoxid, wobei gegebenenfalls eine elektrische Spannung angelegt wird, die einen Anteil der zur Spaltung von Wasser und/oder Kohlenstoffdioxid benötigen Energie beiträgt,

wobei die erste Temperatur $T_{red}$ höher ist als die zweite Temperatur $T_{ox}$ und wobei wenigstens in einem der Schritte i) und ii) eine elektrische Spannung angelegt wird.

Erfindungsgemäß kann sowohl Wasser zu Wasserstoff und Sauerstoff gespalten werden als auch Kohlenstoffdioxid zu Kohlenstoffmonoxid und Sauerstoff. Des Weiteren können auch Wasser und Kohlenstoffdioxid gleichzeitig zu Wasserstoff, Kohlenstoffmonoxid und Sauerstoff gespalten werden. Vorzugsweise wird das Spaltprodukt Sauerstoff getrennt von den Spaltprodukten Wasserstoff beziehungsweise Kohlenstoffmonoxid erhalten.

Das erfindungsgemäße Verfahren ermöglicht es überraschenderweise, bei der Spaltung von Wasser und/oder Kohlenstoffdioxid zur Gewinnung von Wasserstoff und/oder Kohlenstoffmonoxid die eingesetzte Menge an Wärmeenergie und elektrischer Energie beliebig zu variieren beziehungsweise untereinander auszutauschen. Die Erfindung ermöglicht es daher, eine unter den Aspekten der Effizienz, Energiekosten, verfügbaren Energieformen und Reaktormaterialien optimale Menge an elektrischer Energie und Wärmeenergie einzusetzen. Mithilfe des erfindungsgemäßen Verfahrens wird es möglich, in dem in Fig. 3 gezeigten weißen Bereich zu arbeiten, der nach dem Stand der Technik nicht zugänglich ist.

Die in Form von Wärmeenergie bereitgestellte Energie wird mittels eines thermochemischen Kreisprozesses bereitgestellt. Hierbei wird in einem Schritt Wärme in chemische Energie umgewandelt und in einem zweiten Schritt diese chemische Energie zur Spaltung von Wasser/Kohlenstoffdioxid eingesetzt. Die in Form von elektrischer Energie bereitgestellte Energie wird durch Anlegen einer elektrischen Spannung bereitgestellt. Eine elektrische Spannung kann insbesondere während einer oder beider Phasen des Kreisprozesses angelegt werden. Hierbei wird die Umwandlung von Wärme in chemische Energie durch eine Spannung erleichtert und/oder die Spaltung von Wasser/Kohlenstoffdioxid durch eine Spannung unterstützt.

Im Folgenden werden bevorzugte Ausführungsformen der Erfindung beschrieben und dabei teilweise auch die dabei auftretenden physikalischen und chemischen Prozesse theoretisch beschrieben. Diese theoretischen Beschreibungen sind exemplarisch und begrenzen nicht den Gegenstand der Erfindung.

Der Anteil an Wärmeenergie liegt vorzugsweise in einen Bereich von 25 bis 75%. Besonders bevorzugt ist ein Bereich von 30 bis 70%. Weiterhin bevorzugt ist ein Bereich von 40 bis 60%. Insbesondere kann der Anteil an Wärmeenergie 25, 30, 35, 40, 45, 50, 55, 60 oder 65% betragen.

In den zuvor beschriebenen Verfahren der Hochtemperaturelektrolyse aus dem Stand der Technik erfordert die Zuführung eines Teils der benötigen Energie als Wärmeenergie die Durchführung des Verfahrens bei sehr hohen Temperaturen. Mit dem erfindungsgemäßen Verfahren wird es nun ermöglicht, eine größere Menge an Wärmeenergie einzusetzen, ohne dass das Verfahren bei einer technisch nur schwer zugänglichen Temperatur durchgeführt werden muss.

Vorzugsweise wird das Verfahren bei einer maximalen Temperatur von weniger als 1800 °C durchgeführt. Besonders bevorzugt beträgt die maximale Temperatur weniger als 1500 °C, insbesondere weniger als 1000 °C. Unter der maximalen Temperatur wird die höchste während der Durchführung des Verfahrens erreichte Temperatur verstanden. Die Temperatur während der Durchführung des Verfahrens beträgt vorzugsweise wenigstens 100 °C, insbesondere wenigstens 200 °C.

Mit dem erfindungsgemäßen Verfahren kann der Anteil an Wärmeenergie bei einer gegebenen Temperatur über den bei dieser Temperatur mit Hochtemperaturelektrolyse erreichbaren Anteil an Wärmeenergie gesteigert werden. Die theoretisch bei der Hochtemperaturelektrolyse einsetzbare Wärmemenge beträgt $T\Delta S_f$, wobei T die Temperatur in Kelvin und $\Delta S_f$ die Entropieänderung der beteiligten Spezies bezeichnen. Der theoretisch mit Hochtemperaturelektrolyse erreichbare Anteil der Wärmeenergie kann $\Delta S_f/\Delta H$ betragen, wobei $\Delta H$ die Reaktionsenthalpie bezeichnet. Mithilfe des erfindungsgemäßen Verfahrens kann die bei Temperatur T einsetzbare Menge an Wärmeenergie über diesen Wert hinaus gesteigert werden.

In dem erfindungsgemäßen Verfahren werden die aus dem Stand der Technik bekannten Verfahren der Elektrolyse und thermochemischer Kreisprozesse kombiniert. Die Spaltung von Wasser/Kohlenstoffdioxid erfolgt zweistufig. Die Spaltungsprodukte Wasserstoff/Kohlenstoffmonoxid und Sauerstoff werden in unterschiedlichen Stufen des Verfahrens freigesetzt.

Das Redoxmaterial ist insbesondere elektrisch leitend, sauerstoffionenleitend und/oder protonenleitend.

Die nicht zeitgleiche Erzeugung von Wasserstoff und Sauerstoff bietet gegenüber der Standard-Hochtemperaturelektrolyse einen zusätzlichen Sicherheitsvorteil, da die Rekombination der Produktgase erschwert wird, was das Brand-und Explosionsrisiko senkt.

Das Redoxmaterial ist vorzugsweise während des Verfahrens ortsfest und wird nicht transportiert. Überraschenderweise hat sich gezeigt, dass mit einem ortsfesten Redoxmaterial die Vorteile elektrochemischer und thermochemischer Wasserspaltmethoden in einem Gerät ohne bewegliche Teile und ohne Transport von Redoxmaterial kombiniert werden können. Dies führt zu deutlich weniger Verschleiß im Betrieb und niedrigeren Kosten durch geringere Komplexität. Außerdem schließt dies Verluste durch Abkühlung und Re-Oxidation des Redoxmaterials während des Transportvorgangs aus. Dies ermöglicht den Ersatz eines Hochtemperaturelektrolyse-Stacks durch eine Vorrichtung gemäß dieser Erfindung ohne wesentliche betriebliche Anpassungen.

In Verfahren aus dem Stand der Technik zur Spaltung von Wasser und/oder Kohlenstoffdioxid mittels thermochemischer Kreisprozesse werden häufig Redoxmaterialien eingesetzt, die in einer Vorrichtung bewegt beziehungsweise transportiert werden, wobei die Oxidation und Reduktion an unterschiedlichen Stellen stattfinden. Ein großes technisches Problem derartiger Verfahren und Vorrichtungen ist, dass das reduzierte Redoxmaterial beim Transport leicht reoxidiert werden kann, wozu bereits Spuren von Sauerstoff ausreichen können. Diese Re-oxidation wird in dem erfindungsgemäßen Verfahren bevorzugt dadurch vermieden, dass das Redoxmaterial während des Verfahrens ortsfest ist und nicht transportiert wird.

Die Wärmeenergie wird insbesondere in Schritt i) eingebracht, wobei das Redoxmaterial bei einer erhöhten Temperatur unter Freisetzung von Sauerstoff reduziert wird. Ein Teil der zur Reduktion benötigten Energie wird gegebenenfalls durch eine angelegte Spannung bereitgestellt. Auf diese Weise kann die zur Reduktion des Redoxmaterials erforderliche Temperatur gesenkt werden.

Die Spaltung von Wasser und/oder Kohlenstoffdioxid erfolgt in Schritt ii), wobei Wasserstoff und/oder Kohlenstoffmonoxid gebildet wird und das Redoxmaterial unter Aufnahme von Sauerstoff oxidiert wird. Dabei wird die benötigte Energie in Form von chemischer Energie des reduzierten Redoxmaterials und gegebenenfalls in Form von elektrischer Energie durch eine angelegte Spannung bereitgestellt. Weiterhin trägt die Temperatur $T_{ox}$ dazu bei, die insgesamt zur Spaltung des Wassers und/oder Kohlenstoffdioxid benötigte freie Energie zu begrenzen.

Vorzugsweise liegt die Temperatur $T_{red}$ in einem Bereich von 400 bis 1800 °C. Besonders bevorzugt liegt die Temperatur $T_{red}$ in einem Bereich von 600 bis 1500 °C, insbesondere 800 bis 1000 °C. Vorzugsweise liegt die Temperatur $T_{ox}$ in einem Bereich von 100 bis 1500 °C. Besonders bevorzugt liegt die Temperatur $T_{ox}$ in einem Bereich von 500 bis 1400°C, insbesondere 700 bis 900 °C. Die Differenz der beiden Temperaturen beträgt vorzugsweise 10 bis 1000 °C, besonders bevorzugt 50 bis 750 °C, insbesondere 100 bis 500 °C.

Als sauerstoffhaltiges Redoxmaterial kann jedes Material eingesetzt werden, das in einem thermochemischen Kreisprozess bei einer höheren Temperatur unter Abgabe von Sauerstoff reduziert werden kann, sodass bei einer niedrigeren Temperatur die reduzierte Form zur Spaltung von Wasser und/oder Kohlenstoffdioxid eingesetzt werden kann.

In den aus dem Stand der Technik bekannten thermochemischen Kreisprozessen zur Spaltung von Wasser/Kohlenstoffdioxid muss ein sauerstoffhaltiges Redoxmaterial gewählt werden, dessen reduzierte Form ein Reduktionspotential aufweist, das bei den Prozesstemperaturen zur Spaltung von Wasser/Kohlenstoffdioxid ausreicht. Dazu muss das chemische Potential der Oxidation des Redoxmaterials größer sein als das chemische Potential der Spaltungsreaktion von Wasser/Kohlendioxid in Wasserstoff/Kohlenmonoxid und Sauerstoff. Die Auswahl geeigneter Redoxmaterialien ist dadurch beschränkt.

In dem erfindungsgemäßen Verfahren kann während der Spaltung von Wasser/Kohlendioxid in Schritt ii) ein Teil der benötigten Energie durch Anlegen einer Spannung direkt in Form von elektrischer Energie bereitgestellt werden. Das chemische Potential der Oxidationsreaktion des Redoxmaterials kann daher bei den Prozesstemperaturen auch kleiner sein als das chemische Potential der Spaltungsreaktion von Wasser/Kohlendioxid in Wasserstoff/Kohlenmonoxid und Sauerstoff. Die angelegte Spannung muss entsprechend gewählt werden. Dadurch wird jedoch die Auswahl geeigneter Redoxmaterialien gegenüber den thermochemischen Kreisprozessen aus dem Stand der Technik erweitert.

In einer bevorzugten Ausführungsform wird als sauerstoffhaltiges Redoxmaterial ein Metalloxid oder ein Perowskit eingesetzt. Als Metalloxid kann insbesondere ein Oxid eines Übergangsmetalls, seltener Erden oder deren Mischungen eingesetzt werden. Besonders bevorzugte Metalle umfassen Eisen, Mangan, Nickel, Cer, Zirkonium, Titan, Chrom und Cobalt oder deren Mischungen. Grundsätzlich kann jedes Material eingesetzt werden, welches eine ausreichende Reaktionsenthalpie für Oxidation und Reduktion besitzt.

Geeignete Materialien umfassen $Fe_xO_y$ sowie $Mn_xO_y$, jeweils insbesondere mit $x = 2$ bis 3 und $y = 3$ bis 4, $Mn_{1-x}Fe_xO_y$, insbesondere mit $x = 0{,}4$ bis 0,6 und $y = 1{,}33$ bis 1,5, sowie Perowskite in der Form $ABO_3$ mit A=[Ca, Sr, La, Mg, Ba] und B=[Fe, Mn, Ni, Zr, Ce, Cr, Ti, Co, Sc V, Cu, Zn] sowie komplexe Mischoxide mit mehreren A und B Komponenten aus dem genannten Pool. Besonders geeignete Materialien umfassen $LaNiO_3$ und $LaCuO_3$.

Die chemische Potentialdifferenz der reduzierten und der oxidierten Form des Redoxmaterials beträgt vorzugsweise 50 bis 400 kJ/mol(Sauerstoffatome), besonders bevorzugt 50 bis 250 kJ/mol(Sauerstoffatome), ganz besonders bevorzugt 100 bis 200 kJ/mol(Sauerstoffatome), insbesondere 120 bis 160 kJ/mol(Sauerstoffatome). Zur Spaltung von Wasser werden etwa 250 kJ/mol(Sauerstoffatome) benötigt und zur Spaltung von Kohlenstoffdioxid etwa 366 kJ/mol(Sauerstoffatome). Eine wesentlich höhere Potentialdifferenz des Redoxmaterials ist daher jeweils nicht sinnvoll. Beträgt die Potentialdifferenz weniger als 50 kJ/mol(Sauerstoffatome), dann ist die Spaltung von Wasser und/oder Kohlenstoffidoxid durch Reoxidation des Redoxmaterials erschwert. Liegt die Potentialdifferenz im bevorzugten Bereich, kann ein Teil der Reaktionsenergie durch Anlegen einer Spannung bereitgestellt werden.

In einer bevorzugten Ausführungsform wird eine elektrische Spannung in Schritt i) zwischen einer Anode und einer Kathode angelegt wird, wobei die Kathode und die Anode durch einen Elektrolyten, insbesondere durch das sauerstoffhaltige Redoxmaterial, sauerstoffionenleitend verbunden sind und wobei gegebenenfalls das sauerstoffhaltige Redoxmaterial mit der Kathode und dem Elektrolyten elektrisch leitend und sauerstoffionenleitend verbunden ist.

Durch Anlegen einer Spannung in Schritt i) kann ein Teil der zur Reduktion des Redoxmaterials benötigten Energie direkt in Form von elektrischer Energie bereitgestellt werden. Die Spannung kann zwischen einer Anode und einer Kathode angelegt werden. Die Anode und die Kathode können sauerstoffionenleitend verbunden sein, sodass Sauerstoffionen, insbesondere $O^{2-}$-Ionen, zwischen der Anode und Kathode transportiert werden können. An der Anode können Sauerstoffionen zu elementarem Sauerstoff oxidiert werden. Die Sauerstoffionen können dem Redoxmaterial entstammen, welches unter Abgabe von Sauerstoffionen, insbesondere $O^{2-}$-Ionen, reduziert werden kann. Hierbei kann das Redoxmaterial Elektronen aufnehmen. Insbesondere kann das Rexodmaterial Metallatome enthalten, die unterschiedliche Oxidationszahlen aufweisen können, wobei die Metallatome bei der Reduktion ein oder mehrere Elektronen aufnehmen und damit in eine niedrigere Oxidationszahl übergehen können. Die Elektronen können an der Kathode bereitgestellt werden. Daher kann das Redoxmaterial mit der Kathode elektrisch leitend verbunden sein. Insbesondere kann die Kathode aber auch das Redoxmaterial umfassen oder daraus bestehen, was im Sinne der vorliegenden Erfindung auch unter elektrisch leitend verbunden verstanden wird. Die vom Redoxmaterial abgegebenen Sauerstoffionen, insbesondere $O^{2-}$-Ionen, können durch das sauerstoffionenleitende Material des Elektrolyten zur Anode wandern. Dazu kann das Redoxmaterial auch mit dem Elektrolyten sauerstoffionenleitend verbunden sein. Insbesondere kann der Elektrolyt auch das Redoxmaterial umfassen oder daraus bestehen, was im Sinne der vorliegenden Erfindung auch unter sauerstoffionenleitend verbunden verstanden wird.

Neben dem Redoxmaterial selber kann auch ein anderes geeignetes Material als Elektrolyt eingesetzt werden. Vorzugsweise wird ein Festelektrolyt eingesetzt. Geeignete Materialien umfassen beispielsweise stabilisiertes Zirkonoxid - (Y, Ca, Sc)$ZrO_2$.

Als Kathode oder Anode kann, neben dem Redoxmaterial, jedes aus dem Stand der Technik bekannte und geeignete Elektrodenmaterial eingesetzt werden. Insbesondere können die im Stand der Technik für die Hochtemperaturelektrolyse von Wasser und Kohlenstoffdioxid bekannten Elektrodenmaterialien eingesetzt werden. Das Elektrodenmaterial ist vorzugsweise ionenleitend, insbesondere sauerstoffionenleitend oder protonenleitend. Des Weiteren muss das Material bei den Verfahrenstemperaturen stabil sein. Geeignete Materialien umfassen beispielsweise $BaCeO_3$ und $BaZrO_3$, insbesondere als Anodenmaterial, sowie Nickel, insbesondere als Kathodenmaterial.

Die Höhe der angelegten Spannung hängt insbesondere von dem eingesetzten Redoxmaterial ab. Vorzugsweise wird eine Spannung zwischen 0,25 und 2 V angelegt.

Vorzugsweise kann in Schritt i) die Reduktion des Redoxmaterials unterstützt werden, indem der Sauerstoffpartialdruck im Reaktionsraum aktiv gesenkt wird. Sauerstoffgas kann beispielsweise mithilfe eines Spülgases oder mithilfe einer mechanischen Pumpe entfernt werden. Alternativ kann Sauerstoff auch mit einer elektrochemischen Pumpe aus dem Reaktionsraum entfernt werden. Insbesondere kann in Schritt i) die elektrische Spannung zwischen einer Anode und Kathode angelegt werden, die durch einen sauerstoffionenleitenden Elektrolyten verbunden sind, ohne dass das Redoxmaterial leitend mit der Kathode verbunden ist. Dabei kann die Kathode sich in dem Reaktionsraum befinden, während die Anode von dem Reaktionsraum getrennt ist. Bei Anlegen einer Spannung kann Sauerstoff an der Kathode unter Aufnahme von Elektronen zu Sauerstoffionen, insbesondere $O^{2-}$-Ionen, umgesetzt werden. Die Sauerstoffionen können durch den sauerstoffionenleitenden Elektrolyten wandern und an der Anode unter Abgabe von Elektroden wieder zu Sauerstoffgas umgesetzt werden.

In einer weiteren bevorzugten Ausführungsform wird eine elektrische Spannung in Schritt ii) zwischen einer Anode und einer Kathode angelegt wird, wobei die Anode und die Kathode durch einen Elektrolyten, insbesondere ein sauerstoffionenleitendes oder protonenleitendes Material, ionenleitend verbunden sind und wobei gegebenenfalls die Anode mit dem sauerstoffhaltigen Redoxmaterial elektrisch leitend verbunden ist.

Durch Anlegen einer Spannung in Schritt ii) kann ein Teil der zur Spaltung von Wasser und/oder Kohlenstoffdioxid benötigten Energie direkt in Form von elektrischer Energie bereitgestellt werden. Die Spannung wird zwischen einer Anode und einer Kathode angelegt. In Schritt ii) wird das zuvor reduzierte Redoxmaterial reoxidiert, wobei unter Aufnahme von Sauerstoffionen, insbesondere $O^{2-}$-Ionen, Elektronen abgegeben werden können. Insbesondere enthält das Redoxmaterial Metallatome, die unterschiedliche Oxidationszahlen aufweisen können, wobei die Metallatome bei der Oxidation ein oder mehrere Elektronen abgeben und damit in eine höhere Oxidationszahl übergehen. Die Elektronen können an der Anode aufgenommen werden und zur Kathode fließen. Daher kann das Redoxmaterial mit der Anode elektrisch leitend verbunden sein. Insbesondere kann die Anode aber auch das Redoxmaterial umfassen oder daraus bestehen, was im Sinne der vorliegenden Erfindung ebenfalls unter elektrisch leitend verbunden verstanden wird. Die Anode und die Kathode sind durch einen Elektrolyten, insbesondere sauerstoffionenleitend oder protonenleitend, verbunden, sodass Sauerstoffionen, insbesondere $O^{2-}$-Ionen, und/oder Protonen ($H^+$-Ionen) zwischen der Anode und Kathode transportiert werden können.

Wird ein sauerstoffionenleitender Elektrolyt eingesetzt, kann Wasser und/oder Kohlenstoffdioxid an der Kathode unter Abgabe von Sauerstoffionen, insbesondere $O^{2-}$-Ionen, zu Wasserstoff und/oder Kohlenstoffmonoxid reduziert werden. Die dazu benötigen Elektronen können von der Kathode bereitgestellt werden und aus dem Redoxmaterial stammen beziehungsweise bei dessen Oxidation freiwerden. Die freigesetzten $O^{2-}$-Ionen können durch den Elektrolyten wandern und von dem Redoxmaterial aufgenommen werden. Das Redoxmaterial kann in diesem Fall sauerstoffionenleitend mit dem Elektrolyten verbunden sein. Der Elektrolyt kann jedoch auch das Redoxmaterial umfassen oder daraus bestehen, was im Sinne der vorliegenden Erfindung ebenfalls unter sauerstoffionenleitend verbunden verstanden wird.

Neben dem Redoxmaterial kann jedes geeignete sauerstoffionenleitende Elektrolytmaterial eingesetzt werden. Vorzugsweise wird ein Festelektrolyt eingesetzt. Geeignete Materialien umfassen die oben zu Schritt i) genannten sauerstoffionenleitenden Materialien.

In einer alternativen Ausführungsform kann der Elektrolyt auch protonenleitend sein. Diese Ausführungsform ist besonders für die Spaltung von Wasser relevant. Wasser kann beispielsweise direkt mit dem Redoxmaterial reagieren, wobei Wasser gespalten wird und der enthaltene Sauerstoff in das Redoxmaterial aufgenommen wird. Das Redoxmaterial wird dabei oxidiert und gibt Elektronen ab, die über die Anode aufgenommen und zur Kathode fließen können. Die bei der Wasserspaltung anfallenden Protonen können durch den protonenleitenden Elektrolyten zur Kathode wandern und dort zu Wasserstoff reduziert werden. Dabei ist insbesondere das Redoxmaterial zur Abgabe von Elektronen elektrisch leitend mit der Kathode verbunden. Zur Übertragung von Protonen ist das Redoxmaterial mit dem Elektrolyten protonenleitend verbunden. Auch in dieser Ausführungsform kann die Anode oder der Elektrolyt das Redoxmaterial umfassen oder daraus bestehen, was im Sinne der vorliegenden Erfindung ebenfalls unter elektrisch leitend oder protonenleitend verbunden verstanden wird.

Neben dem Redoxmaterial selber kann auch ein anderes geeignetes Material als protonenleitender Elektrolyt eingesetzt werden. Vorzugsweise wird ein Festelektrolyt eingesetzt. Geeignete Materialien umfassen beispielsweise (Ba, Sr, Ca)(Ce, Zr)$O_3$, gegebenenfalls dotiert/stabilisiert mit Sc, Y oder Yb.

Als Kathode oder Anode kann, neben dem Redoxmaterial, jedes aus dem Stand der Technik bekannte und geeignete Elektrodenmaterial eingesetzt werden. Insbesondere können die gleichen Materialien wie zuvor für Schritt i) beschrieben eingesetzt werden.

Die Höhe der angelegten Spannung hängt von dem eingesetzten Redoxmaterial ab. Vorzugsweise wird eine Spannung zwischen 0,75 bis 2,5 V angelegt.

Vorzugsweise kann in Schritt ii) die Wasserspaltung unterstützt werden, indem der Wasserstoffpartialdruck im Reaktionsraum aktiv gesenkt wird. Wasserstoffgas kann beispielsweise mithilfe eines Spülgases oder mithilfe einer mechanischen Pumpe entfernt werden. Alternativ kann Wasserstoff auch mit einer elektrochemischen Pumpe aus dem Reaktionsraum entfernt werden. Insbesondere kann in Schritt ii) die elektrische Spannung zwischen einer Anode und Kathode angelegt werden, die durch einen protonenleitenden Elektrolyten verbunden sind, ohne dass das Redoxmaterial leitend mit der Anode verbunden ist. Dabei kann die Anode sich in dem Reaktionsraum befinden, während die Kathode von dem Reaktionsraum getrennt ist. Bei Anlegen einer Spannung kann Wasserstoff an der Anode unter Abgabe von Elektronen zu Protonen ($H^+$-Ionen) umgesetzt werden. Die Protonen wandern durch den protonenleitenden Elektrolyten und werden an der Kathode unter Aufnahme von Elektroden wieder zu Wasserstoffgas umgesetzt.

In dem erfindungsgemäßen Verfahren können sowohl Redoxmaterialien wie in einem zweistufigen solar-thermochemischen Prozess (gegebenenfalls mit niedrigerer Redoxenthalpie) als auch elektrolytische Membranen eingesetzt werden. Da viele der Materialien, welche als Membranen für die Hochtemperaturelektrolyse eingesetzt werden (Perowskite) chemisch sehr ähnlich zu thermochemischen Wasserspaltmaterialien sind, lassen sich Materialien finden, welche sowohl als Elektrolysemembran, als auch als Redoxmaterial eingesetzt werden können. Die dazu nötige Materialauswahl lässt sich mit Datenbanken wie RedoxThermoCSP (MPContribs/Materialsproject; https://portal.mpcon-tribs.org/redox_thermo_csp/, abgerufen am 13.11.2019) als Startpunkt durchführen. Im benötigten Enthalpiebereich findet sich eine Reihe an Perowskiten. Viele davon sind chemisch sehr ähnlich zu den in Elektrolysezellen eingesetzten LSM-(Lanthan-Strontium-Mangan)-Perowskiten.

Sowohl die erfindungsgemäß eingesetzte Wärme als auch die erfindungsgemäß eingesetzte elektrische Energie werden vorzugsweise aus erneuerbaren Energiequellen bereitgestellt. Insbesondere können beide Energieformen aus Sonnenenergie bereitgestellt werden. Die elektrische Energie kann mit jeder im Stand der Technik bekannten Solarenergietechnik gewonnen werden. Insbesondere kann die elektrische Energie aus einer erneuerbaren Quelle, wie Windkraft, Wasserkraft, Sonnenenergie, beispielsweise mittels Photovoltaik oder Solarthermie wie CSP (concentrated solar power), oder dergleichen gewonnen werden. Die Wärmeenergie kann insbesondere direkt aus Sonnenstrahlung gewonnen werden, wobei die Strahlung zur Erwärmung des Redoxmaterials, insbesondere in Schritt i) der oben beschriebenen bevorzugten Ausführungsform, eingesetzt wird. Alternativ kann die benötigte Wärmeenergie auch indirekt bereitgestellt werden, insbesondere indem ein Fluid, insbesondere Luft, erwärmt wird und mit diesem erwärmten Fluid, insbesondere heißer Luft, das Redoxmaterial erwärmt wird. Insbesondere kann ein Fluid wie Luft mittels Sonnenstrahlung erwärmt werden und dann zur Erwärmung des Redoxmaterials eingesetzt werden. Die indirekte Erwärmung des Redoxmaterials weist den Vorteil auf, dass ein Überhitzen von Teilen des Reaktors vermieden werden kann.

Vorzugsweise wird das erfindungsgemäße Verfahren so durchgeführt, dass der Verlust an Wärme an die Umgebung möglichst gering ist. So können insbesondere zwei thermochemische Kreisprozesse gleichzeitig durchgeführt werden, deren Phasen verschoben sind. Während der eine Prozess sich in der wärmeren Reduktionsphase befindet, ist der andere Prozess in der kälteren Oxidationsphase. Beim Wechsel der Phasen, kann die aus dem einen Prozess überschüssige Wärme zur Heizung des anderen Prozesses benutzt werden, während der andere Prozess zur Kühlung des ersten Prozesses eingesetzt werden kann. Auf diese Weise können auch mehr als zwei Prozesse miteinander gekoppelt werden.

Weiterhin kann bevorzugterweise das Eduktgas Wasserdampf und/oder Kohlenstoffdioxid bei einer Temperatur zugeführt werden, die kälter ist als die Temperatur im Oxidationsschritt. Auf diese Weise kann das Eduktgas zur Kühlung eingesetzt werden und die aus dem Reduktionsschritt überschüssige Wärme zur Aufheizung des Eduktgases eingesetzt werden. Weiterhin bevorzugt ist es, die mit dem Produktgasen abgeführte Wärme zurückzugewinnen und dem Prozess erneut zuzuführen.

Im Folgenden werden die besonderen Vorteile des bevorzugten erfindungsgemäßen Verfahrens beispielhaft beschrieben, ohne dass die Erfindung dadurch beschränkt wäre. Die folgenden Ausführungen beziehen sich auf die Produktion von Wasserstoff. In physikalisch-chemisch analoger Weise kann mit dem erfindungsgemäßen Verfahren jedoch auch Kohlenstoffmonoxid aus Kohlenstoffdioxid erzeugt werden, oder beide Stoffe gleichzeitig nach dem Vorbild der Ko-Elektrolyse.

Wie bereits oben erwähnt, soll die Energie für die Wasserspaltung ($E_{ws}$) durch Kombination eines elektrischen und eines chemischen Potentials bereitgestellt werden:

$$E_{ws} = \mu_{chem} + \mu_{elec} \hspace{3cm} (III)$$

Physiochemisch entspricht der dabei ablaufende Prozess der Hochtemperaturelektrolyse, jedoch wird die Gibbs-Energie der Wasserspaltung durch das chemische Potential eines zuvor reduzierten Redoxmaterials abgesenkt, da dieses durch seine Sauerstoffaffinität die Abspaltung von Sauerstoff begünstigt. Bei der thermischen Reduktion des oxidierten Metalloxids wird die dazu notwendige Energie als Wärmeenergie zugeführt, der Anteil an Wärmeenergie am Gesamtenergiebedarf steigt.

Aus dem Hochtemperatur-Elektrolyseprozess und dem zweistufigen thermochemischen Kreisprozess wird so ein zweistufiger Hochtemperatur-Elektrolyseprozess:

1. Reduktion des Metalloxids bei höherer Temperatur ($T_{red}$), unterstützt durch ein elektrisches Potential, welches die Sauerstoffionenleitung antreibt.

2. Oxidation des Metalloxids bei niedrigerer Temperatur ($T_{ox}$) in Wasserdampf, wobei ein elektrisches Potential anliegt und einen wesentlichen Anteil der zur Wasserspaltung nötigen Energie beiträgt.

Ähnlich wie in einer Festoxid-Hochtemperaturelektrolysezelle werden Oxidionen durch ein elektrisches Potential bewegt, um die Wasserspaltung zu ermöglichen. Durch das chemische Potential wird jedoch die Triebkraft des Prozesses erhöht, so dass das benötigte elektrische Potential sinkt. Der Gesamtanteil an thermischer Energie wird somit gegenüber der Hochtemperaturelektrolyse deutlich erhöht, wie in Fig. 4 exemplarisch dargestellt ist. In Fig. 4 findet die Oxidation des Metalloxids bei 600 °C statt, die Reduktion bei unterschiedlichen Temperaturen ($T_{max}$).

Fig. 4 zeigt den Energiebedarf zur Wasserstofferzeugung (in kJ/mol $H_2$) bei einem isothermen Hochtemperaturelektrolyseprozess nach Stand der Technik (grau, vgl. Fig. 1) und in einem zweistufigen Hochtemperaturelektrolyseprozess unter Zuhilfenahme eines chemischen Potentials mit Reduktion des Metalloxids bei T(max) und Oxidation bei 600 °C. Der Anteil an Wärmeenergie am Gesamtenergiebedarf ist im zweistufigen Prozess deutlich höher.

Zur Erstellung von Fig. 4 wurde zunächst der gesamte Bedarf an Energie bei der klassischen Hochtemperaturelektrolyse berechnet.

Dazu wurde die Bildungsenthalpie von Wasser bei entsprechenden Temperaturen aus den NIST-Tabellen (Gas Phase Thermochemistry Data, https://web-book.nist.gov/, abgerufen am 13.11.2019) mit Hilfe der Shomate-Gleichungen berechnet. Im Falle des erfindungsgemäßen zweistufigen Prozesses wurde die Durchschnittstemperatur aus Oxidation und Reduktion verwendet, daher liegt der Gesamtenergiebedarf für diesen Prozess in Fig. 4 für eine gegebene Reduktionstemperatur T(max) auf der x-Achse etwas unterhalb des Gesamtenergiebedarfs der klassischen isothermen Elektrolyse bei dieser Temperatur.

Der Wärmeenergiebedarf der klassischen Hochtemperaturelektrolyse $\Delta Q_{HTE}$ wurde dann nach Ebbesen et al. (Ebbesen et al.; High Temperature Electrolysis In Alkaline Cells, Solid Proton Conducting Cells, and Solid Cells; Chem. Rev. 2014, 141, 21, 10697-10734) aus der Differenz zwischen dem Gesamtenergiebedarf $\Delta E_{HTE}$ und dem Bedarf an elektrischer Energie berechnet. Letztere entspricht nach Ebbesen et al. der freien Gibbs-Energie $\Delta G_{ws}$ der Wasserspaltung, welche der Literatur entnommen wurde (Barin, I. Thermochemical Data of Pure Substances, Third Edition. 2008).

Die zusätzlich aufgewendete Wärmeenergie zur Reduktion des Metalloxids wird bei dessen Oxidation zur Wasserspaltung verwendet. Die zur Reduktion nötige Wärmeenergie bei einer bestimmten Reduktionstemperatur wurde allgemein für Perowskite berechnet, indem die thermodynamische Gleichgewichtslage für diese Materialien berechnet wurde. Dabei wurden einige Annahmen getroffen:

- Die Entropieänderung $\Delta S(\delta,T)$ wurde als Summe der partiellen molaren Entropie von Sauerstoff (Gas Phase Thermochemistry Data, https://web-book.nist.gov/, abgerufen am 13.11.2019) und der Konfigurationsentropie berechnet, wobei der Konfigurationsentropierechnung eine ideale feste Lösung ohne Wechselwirkung der einzelnen Bestandteile zugrunde gelegt wurde (Dilute Species Model, siehe Vieten et al.; Materials design of perovskite solid solutions for thermochemical applications; Energy Environ. Sci. 2019, 12, 1369-1384). Die Vibrationsentropie wurde vernachlässigt, da diese nur einen kleinen Beitrag zur Gesamtentropie liefert und abhängig von der Zusammensetzung des Perowskits ist, sich daher also nicht verallgemeinern lässt.

- Die Enthalpieänderung der Redoxreaktion wurde näherungsweise als temperaturunabhängig angenommen.

- Mit dem Startwert $\Delta H$ = 50 kJ/mol, $p_{O2}$ = 1 bar (Sauerstoff erzeugt unter atmosphärischem Druck) und

$$\Delta G = \Delta H - T \cdot \Delta S(\delta,T) + \tfrac{1}{2}\, RT \ln(p_{O2})$$

wurden für T = $T_{ox}$ und T = $T_{red}$ jeweils die Gleichgewichtswerte $\delta_{red}$ und $\delta_{ox}$ berechnet. Der Wärmeenergieaufwand zur Reduktion pro mol Sauerstoff O (oder pro mol $H_2$ bzw. $H_2O$ bei der Oxidation) ergibt sich dann als $\Delta Q_{chem}$ = $\Delta H \cdot (\delta_{red} - \delta_{ox})$

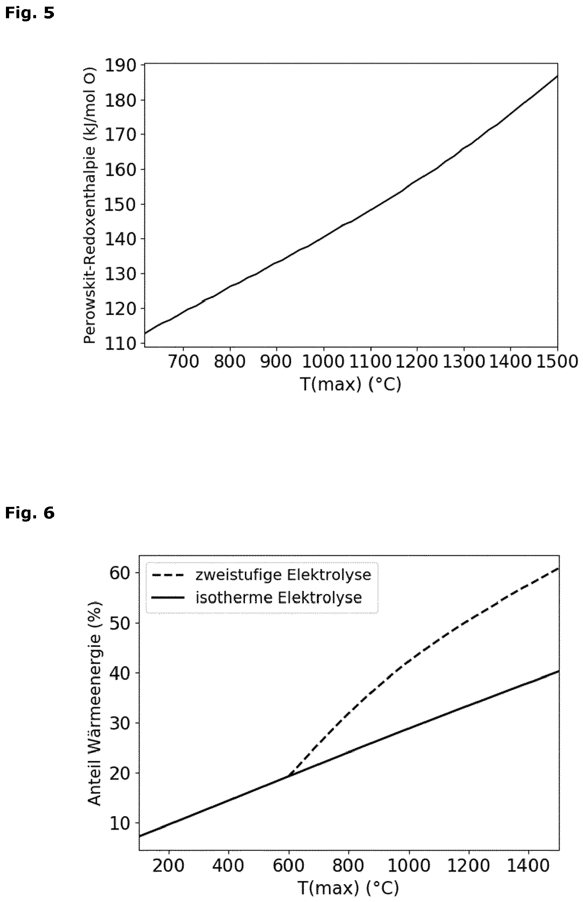

- Die Redoxenthalpie $\Delta H$ der Perowskite wurde dann so lange optimiert, bis $\Delta Q$ unter den gegebenen Bedingungen maximal war (siehe Fig. 5). So ergibt sich die Prozessvariante mit dem höchsten möglichen Anteil an Wärmeenergie am Gesamtenergiebedarf.
  Fig. 5 zeigt die optimierte Redoxenthalpieänderung $\Delta H$ (in kJ/mol O) für Perowskite als Redoxmaterialien in einem zweistufigen thermochemischen Elektrolyseprozess mit Oxidation bei 600 °C und Reduktion bei verschiedenen Temperaturen T(max).
  Im oben dargestellten Enthalpiebereich zwischen 110 und 190 kJ/mol O befinden sich 40 Perowskitmaterialien einer theoretischen Studie von Vieten et al. (Vieten et al.; Materials design of perovskite solid solutions for thermochemical applications; Energy Environ. Sci. 2019, 12, 1369-1384). Es lässt sich für jeden Anwendungsbereich beziehungsweise für jedes Temperaturniveau mittels Materialdesign ein passendes Perowskit finden.

- Der Gesamtwärmeenergieanteil berechnet sich dann zu $Q_{gesamt}$ = $\Delta Q_{chem}$ + $\Delta Q_{HTE}$.

- Der Anteil an elektrischer Energie entspricht dann $\Delta E_{HTE}$ - $Q_{gesamt}$.

Je höher die Reduktionstemperatur ist, desto höher wird der Anteil an thermischer Energie am Gesamtenergiebedarf (Fig. 6).
Fig. 6 zeigt den Anteil der Wärmeenergie am Gesamtenergiebedarf bei der Hochtemperaturelektrolyse nach Stand der Technik (isotherme Elektrolyse) verglichen mit der hier vorgestellten zweistufigen Elektrolyse bei Oxidation bei 600 °C und Reduktion bei T(max).
Bemerkenswerterweise ist so beispielsweise bei einem zweistufigen Prozess mit Reduktion bei 900 °C und Oxidation bei 600 °C der Wärmeenergieanteil genauso hoch, wie bei einem Hochtemperaturelektrolyseprozess bei über 1300 °C. Hochtemperaturelektrolyseprozesse bei derart hohen Temperaturen können aufgrund der dabei auftretenden technischen Schwierigkeiten kaum durchgeführt werden.
Die vorliegende Erfindung ermöglicht es also, den Anteil an thermischer Energie bei der Elektrolyse beziehungsweise Wasserspaltung deutlich zu steigern, ohne dabei die Betriebstemperatur der Anlage zu erhöhen.
Dadurch ist es möglich...

- ...günstigere Anlagen beziehungsweise Reaktoren einzusetzen, da diese bei niedrigeren Temperaturen betrieben werden

- ...einen größeren Anteil an Wärmeenergie am Gesamtenergiebedarf zu verwenden, was die Energiekosten gegenüber der isothermen Hochtemperaturelektrolyse senkt (Annahme wie oben erwähnt 1 €ct/kWh vs. 2€ct/kWh bei Solarenergie):

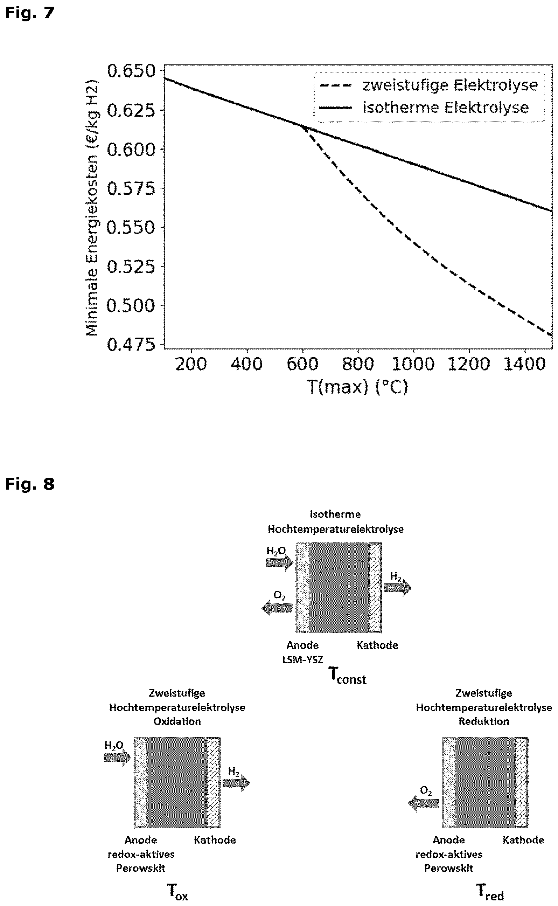

Fig. 7 zeigt die Energiekosten der Hochtemperatureelektrolyse pro kg Wasserstoff nach Stand der Technik (isotherme Elektrolyse) verglichen mit den Energiekosten der zweistufigen Hochtemperatureelektrolyse, jeweils in Abhängigkeit von der maximalen Betriebstemperatur T(max). Annahme: elektrische Energie bereitgestellt durch Photovoltaik zu 2 €ct/kWh, thermische Energie bereitgestellt mit konzentrierender Solarwärme zu 1 €ct/kWh.

- ...gegebenenfalls Probleme durch Rissbildung an den Materialien zu vermindern, da diese bei niedrigerer Temperatur eingesetzt werden und so bei Inbetriebnahme der Anlage weniger Wärmeausdehnung stattfindet.

Zusammenfassend lassen sich die Merkmale dieser Erfindung zum dem Stand der Technik folgendermaßen gegenüberstellen:

| | Hochtemp.-Elektrolyse | Thermoch. Kreisprozess | Diese Erfindung |
|---|---|---|---|
| **Triebkraft der Wasserspaltungsreaktion** | Elektrisches Potential $\mu_{elec}$ + vergleichsweise geringer Wärmeanteil | Chemisches Potential $\mu_{chem}$, erzeugt durch thermische Energie | $\mu_{elec} + \mu_{chem}$ |
| **Anteil Wärmeenergie** | max. 20-25 % | bis 100 % | Beliebig, bei Temperaturen unter 1000 °C jedoch bereits > 40 % |
| **Gesamtenergiebedarf** | leicht oberhalb des thermodynamischen Minimums | Derzeit ein Vielfaches des thermodynamischen Minimums | leicht oberhalb des thermodynamischen Minimums, falls sensible Wärme nicht verloren geht |
| **Gesamtenergiekosten pro mol H2** | Vergleichsweise gering | Derzeit ein Vielfaches der Elektrolysekosten | 10-20 % unterhalb der Hochtemperatureelektrolyse, falls sensible Wärme nicht verloren geht |
| **Aufwand temperaturbeständige Materialien** | Vergleichsweise gering | Sehr hoch | Vergleichsweise gering |
| **Solare Beheizung der Materialien** | Indirekt möglich (durch Nutzung eines Wärmeträgermediums) | Derzeit nur direkt möglich (hohe Temperaturen) | Indirekt möglich |
| **Typische Rückstrahlverluste Solarreceiver** | 5 % | 25 % | 5 % (bei T < 1000 °C) |
| **Minimal notwendige Reaktionstemperatur** | Keine Begrenzung | 1250-1800 °C zur Reduktion | Nur begrenzt durch Reaktionskinetik der Perowskite |
| **Erzeugung von Wasserstoff und Sauerstoff** | Gleichzeitig | Zeitlich getrennt | Zeitlich getrennt |

Die hier gezeigten theoretischen Rechnungen gelten allgemein und geben das theoretische Minimum des Energiebedarfs an. In der Praxis wird bei einer Elektrolysezelle durch Überpotentiale der elektrische Energiebedarf etwas höher sein als das theoretische Minimum. Dies gilt gleichermaßen für die isotherme Elektrolyse nach Stand der Technik, wie auch für das hier vorgeschlagene System. Eine Hochtemperatureelektrolysezelle zeichnet sich jedoch dadurch aus, dass die dadurch entstehende Abwärme nicht verloren geht, sondern im endothermen Elektrolyseprozess genutzt wird.

Ein wesentlicher Vorteil der hier dargestellten Erfindung ist, dass diese technisch ähnlich wie ein Hochtemperatur-Elektrolysestack aufgebaut werden kann, so dass der Großteil der eingesetzten Wärme zur Elektrolyse verwendet wird und nicht verloren geht.

In einer alternativen Ausführungsform wird die erfindungsgemäße Aufgabenstellung gelöst durch eine Vorrichtung zur Durchführung des erfindungsgemäßen Verfahrens, umfassend eine Anode, eine Kathode und einen ionenleitenden Elektrolyten, insbesondere einen Festelektrolyten, wobei der Elektrolyt zwischen der Anode und der Kathode angeordnet ist, und wobei die Anode und/oder der Elektrolyt ein sauerstoffhaltiges Redoxmaterial, insbesondere ein Metalloxid, umfassen. Die Anode und/oder der Elektrolyt können auch aus dem sauerstoffhaltigen Redoxmaterial bestehen. Als Materialien für das Redoxmaterial, die Kathode, Anode sowie den Elektrolyt können die zuvor für das erfindungsgemäße Verfahren beschriebenen Ausführungen zum Einsatz kommen.

Die erfindungsgemäße Vorrichtung ist angelehnt an eine Vorrichtung zur Hochtemperaturelektrolyse aus dem Stand der Technik. Gegenüber diesem Stand der Technik unterscheidet sich die Vorrichtung insbesondere durch den Einsatz des sauerstoffhaltigen Redoxmaterial als Teil der Anode oder des Elektrolyten, womit in der Vorrichtung ein thermochemischer Kreisprozess und ein Elektrolyseprozess kombiniert werden können.

In einer bevorzugten Ausführungsform der erfindungsgemäßen Vorrichtung sind mehrere erfindungsgemäße Vorrichtungen nebeneinander angeordnet. Die Vorrichtungen können sich auf diese Weise abwechselnd in zwei Verfahrensschritten befinden und so die zugeführte Wärme optimal genutzt werden.

In einer weiteren alternativen Ausführungsform wird die erfindungsgemäße Aufgabenstellung gelöst durch eine Vorrichtung zur Durchführung des erfindungsgemäßen Verfahrens, umfassend einen Reaktionsraum, enthaltend ein sauerstoffhaltiges Redoxmaterial, eine Vorrichtung zur direkten Beheizung des sauerstoffhaltigen Redoxmaterials in dem Reaktionsraum mit Sonnenstrahlung, eine Vorrichtung zur Zuführung von Wasser und/oder Wasserdampf zu dem sauerstoffhaltigen Redoxmaterial in dem Reaktionsraum, wobei der Reaktionsraum wenigstens zwei Hohlräume aufweist, die durch das sauerstoffhaltige Redoxmaterial voneinander getrennt sind, wobei ein erster Hohlraum eine Vorrichtung zur Entfernung von Wasserstoff und/oder Kohlenmonoxid aus dem Reaktionsraum und ein zweiter Hohlraum eine Vorrichtung zum Entfernen von Sauerstoff aus dem Reaktionsraum umfasst, wobei die Vorrichtung weiterhin wenigstens zwei Elektroden umfasst, die jeweils mit dem Redoxmaterial in Kontakt stehen, wobei eine Elektrode in dem ersten Hohlraum angeordnet ist und die andere Elektrode in dem zweiten Hohlraum.

Die erfindungsgemäße Vorrichtung ist angelehnt an einen thermochemischen Reaktor aus dem Stand der Technik. Sie unterscheidet sich von diesem Stand der Technik insbesondere durch den Einsatz zweier Elektroden, mit denen sich zwischen den beiden Hohlräumen über das Redoxmaterial eine Spannung anlegen lässt zur Unterstützung der Reduktion des Redoxmaterials mittels elektrischer Energie.

In einer weiteren alternativen Ausführungsform wird die erfindungsgemäße Aufgabenstellung gelöst durch eine Vorrichtung zur Durchführung des erfindungsgemäßen Verfahrens, umfassend einen Reaktionsraum enthaltend ein sauerstoffhaltiges Redoxmaterial, eine Vorrichtung zur direkten Beheizung des sauerstoffhaltigen Redoxmaterials in dem Reaktionsraum mit Sonnenstrahlung, eine Vorrichtung zur Zuführung von Wasser und/oder Wasserdampf zu dem sauerstoffhaltigen Redoxmaterial in dem Reaktionsraum, wobei der Reaktionsraum wenigstens zwei Hohlräume aufweist, die durch das sauerstoffhaltige Redoxmaterial voneinander getrennt sind, wobei ein erster Hohlraum eine Vorrichtung zum Entfernen von Sauerstoff aus dem Reaktionsraum umfasst, und wobei ein zweiter Hohlraum als Teil einer Wand des Reaktionsraums ein protonenleitendes Material zur Entfernung von Wasserstoff aus dem Reaktionsraum umfasst, wobei die Vorrichtung weiterhin wenigstens zwei Elektroden umfasst, wobei eine erste Elektrode innerhalb des zweiten Hohlraums mit dem protonenleitenden Material in Kontakt steht und eine zweite Elektrode außerhalb des Reaktionsraums mit dem protonenleitenden Material in Kontakt steht.

Die erfindungsgemäße Vorrichtung ist angelehnt an einen thermochemischen Reaktor aus dem Stand der Technik. Sie unterscheidet sich von diesem Stand der Technik insbesondere durch den Einsatz zweier Elektroden, mit denen sich zwischen dem Reaktionsraum und der Außenwelt über ein protonenleitendes Material eine Spannung anlegen lässt zur Entfernung von gebildetem Wasserstoff aus dem Reaktionsraum. Hierdurch kann die Wasserstoffkonzentration im Reaktionsraum abgesenkt werden, wodurch die zur Wasserspaltung erforderliche freie Energie abgesenkt wird.

**Ausführungsbeispiele**

Im Folgenden werden zwei Ausführungsbeispiele der vorgestellten Erfindung dargestellt. Beispiel 1 ist ein Prozess für Temperaturen unter 1000 °C. Die dazu notwendige Apparatur ist an bestehende Hochtemperatur-Elektrolysestacks angelehnt. Beispiel 2 ist ein Prozess für höhere Temperaturen. Der dazu nötige Reaktor ist an bestehende zweistufige Redoxreaktoren angelehnt.

**Beispiel 1**

In einem Elektrolysestack wurde Wasserdampf in Wasserstoff und Sauerstoff gespalten. Der Elektrolysestack bestand aus sechs Elektrolysezellen. In einer Hochtemperaturelektrolysezelle nach Stand der Technik mit Oxidionen als Ladungsträgern besteht die Anode aus LSM und Yttrium-stabilisiertem Zirkoniumdioxid. Diese Anode wurde in den hier verwendeten Elektryolysezellen ersetzt durch ein ähnliches, aber redox-aktives Perowskit, welches bei hoher Temperatur reduzierbar ist und entsprechend Sauerstoff abgibt, namentlich $SrMn_{0.125}Fe_{0.875}O_{3-\delta}$.

Die Kathoden der Elektrolysezellen waren aus Ni-YSZ (Nickel dotiertes Yttrium stabilisiertes Zirkonoxid) gebildet. Der Elektrolyt war eine sauerstoffleitende Membran aus $Y-ZrO_2$ (Yttrium stabilisiertes Zirkonoxid, YSZ).

Fig. 8 vergleicht eine isotherme Hochtemperatur-Elektrolysezelle nach Stand der Technik mit der erfindungsgemäßen zweistufigen Hochtemperaturelektrolyse. Das redox-aktive Perowskit führt zu einem stark temperaturabhängigen chemischen Sauerstoffpotential, was dazu führt, dass die Sauerstofferzeugung beim Erhitzen des Materials stattfindet, während die Wasserstofferzeugung bei Wasserdampfzufuhr beim Abkühlen des Materials stattfindet. Durch das zusätzliche chemische Potential wird der Wärmeenergieanteil am Gesamtenergiebedarf erhöht.

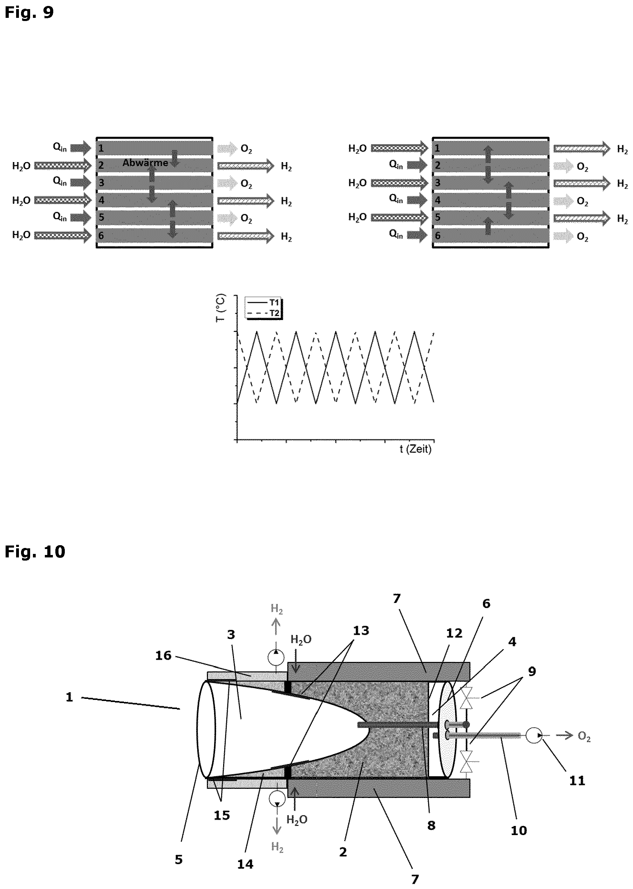

Die anderen Bestandteile der Elektrolysezellen des Stacks waren gegenüber dem Stand der Technik unverändert. Die einzelnen Zellen waren dabei durch gasundurchlässige Schichten aus Stahl mit einer $Al_2O_3$-Beschichtung getrennt, welche jedoch in gewissem Ausmaß wärmeleitend sind. Der Aufbau des Stacks ist in Fig. 9 dargestellt.

Zum Betrieb des Elektrolysestacks wurde jede zweite Schicht beziehungsweise Elektrolyezelle abwechselnd beheizt (Fig. 9). Die jeweils gerade heißen Elektrolysezellen beheizten indirekt die kühleren Zellen. Zur Kühlung der jeweils kühleren Zellen wurde direkt nach Abschluss der Reduktion bei $T_{red}$ = 1000 °C kühlerer Wasserdampf zugeführt, welcher über den Verlauf der Oxidation des Redoxmaterials dieses bis auf $T_{ox}$ = 600 °C abkühlt. Das Elektrolysestacksystem war geschlossen, so dass keine Wärme entweichen kann. Die in den Produktgasen enthaltene Wärme wird zurückgewonnen, sodass die zugeführte Wärme $Q_{in}$ vollständig zur Wasserspaltung genutzt wird - ohne Verluste durch sensible Wärme.

Fig. 9 zeigt den zyklischen Betrieb des zweistufigen Hochtemperatur-Elektrolysestacks aus Beispiel 1. Es wurden jeweils abwechselnd die Zellen 1, 3 und 5 bzw. die Zellen 2, 4, und 6 geheizt. Die gerade beheizten Zellen produzieren Sauerstoff, während die gekühlten Zellen Wasserstoff produzieren. Der idealisierte Temperaturverlauf in zwei der Zellen ist in Fig. 9 unten dargestellt.

**Beispiel 2**

Dieses Beispiel beschreibt einen direkt solar beheizten Hochtemperaturprozess in Anlehnung an bestehende thermochemische Reaktoren. Hierbei ist das Redoxmaterial gleichzeitig auch sauerstoffpumpende Membran. Zusätzlich ist eine protonenpumpende Membran erforderlich.

Bei der Verwendung von derartigen Materialien als Membranen ist aufgrund der niedrigen Ionenleitfähigkeit der Feststoffe darauf zu achten, dass die Diffusionswege nicht zu lang sind. Idealerweise handelt es sich daher um poröse Strukturen, die von Elektroden durchdrungen sind.

Der vereinfachte Aufbau des Reaktors ist in Fig. 10 gezeigt. Fig. 10 zeigt den Aufbau des direkt beheizten Hochtemperaturreaktors 1 zur elektrisch unterstützten thermochemischen Wasserspaltung. Bei den ionenleitenden Membranen ist darauf zu achten, dass die Diffusionswege ausreichend kurz sind, um eine effektive Ionenleitung zu ermöglichen.

Der Hochtemperaturreaktor 1 umfasst einen geschlossenen Reaktorraum, in den ein poröses Redoxmaterial 2 eingebracht ist. Als Redoxmaterial wird hier $SrMn_{0.125}Fe_{0875}O_{3-\delta}$ eingesetzt. Das Redoxmaterial 2 teilt den Innenraum des Reaktors in eine Kavität 3, die einen ersten Hohlraum bildet, sowie einen zweiten rückseitigen Hohlraum 4. Die Kavität 3 ist parabolisch ausgebildet und wird durch ein Quartz-Fenster 5 abgeschlossen. Durch das Quarz-Fenster 5 können Sonnenstrahlen in den Reaktorraum gelangen und das Redoxmaterial 2 bestrahlen und damit erwärmen. Der rückseitige Hohlraum 4 wird durch eine Reaktorrückwand 6 abgeschlossen. Zur Einbringung von Wasser(dampf) in den Reaktorraum aus einem außerhalb des Reaktors 1 angeordnetem Wasser-/Dampfreservoirs 7 umfasst der Reaktor 1 ein poröses Aluminiumoxidrohr 8, welches die Kavität 3 mit dem Wasser-/Dampfreservoir 7 verbindet, wobei das Redoxmaterial 2, der rückseitige Hohlraum 4 sowie die Reaktorrückwand 6 durchbrochen werden. Das poröse Aluminiumoxidrohr 8 ist dabei über Leitungen mit dem Wasser-/Dampfreservoir 7 verbunden, wobei in die Leitungen Ventile 9 eingebracht sind um die Zufuhr von Wasser(dampf) zu steuern. Ein weiteres Aluminiumoxidrohr 10 verbindet den rückseitigen Hohlraum 4 mit der Außenwelt und durchdringt dabei die Reaktorrückwand 6. An das Aluminiumoxidrohr 10 ist eine mechanische Pumpe 11 angeschlossen. Mithilfe der mechanischen Pumpe kann die Entfernung von in dem rückseitigen Hohlraum 4 gebildeten Sauerstoff aus dem Reaktorraum unterstützt werden.

Der Reaktor umfasst weiterhin Elektroden 12, die in dem rückseitigen Hohlraum 4 mit dem porösen Redoxmaterial 2 in Kontakt stehen. Weitere Elektroden 13 stehen in der Kavität 3 mit dem porösen Redoxmaterial 2 in Kontakt. Zwischen den Elektroden 12 und 13 kann eine Spannung angelegt werden.

Der Reaktor umfasst weiterhin einen Protonenleiter 14, der einen Teil der Außenhülle der Kavität 3 bildet. Als Protonenleiter kommt $BaZrO_3$ zum Einsatz. Die Elektroden 13 stehen mit dem Protonenleiter 14 in Kontakt. Weitere Elektroden 15 sind außerhalb an dem Protonenleiter 15 angebracht. Zwischen den Elektroden 13 und 15 kann eine Spannung angelegt werden.

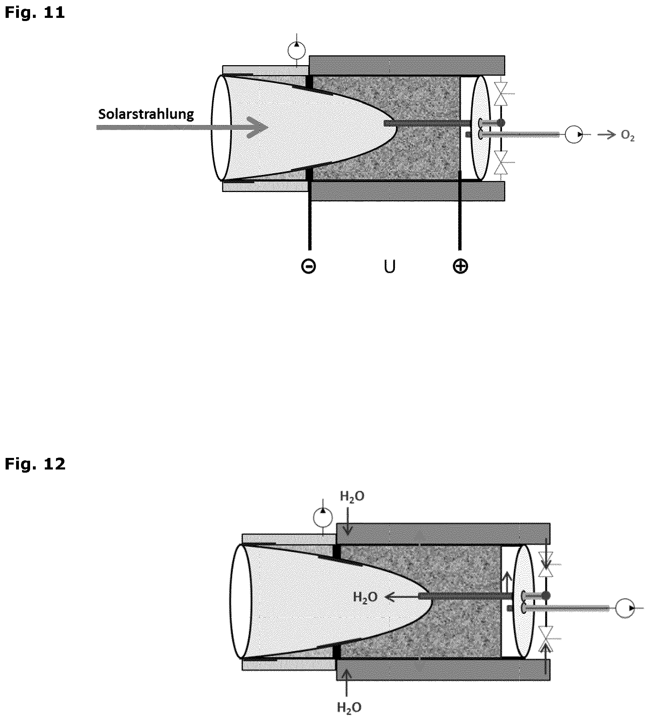

Im Folgenden ist der zyklische Betrieb dieses Reaktors dargestellt. In einem ersten Schritt wird das Redoxmaterial 2 bei hoher Temperatur unter niedrigem Sauerstoffpartialdruck (pO2) reduziert. Fig. 11 zeigt den elektrochemisch unterstützten Reduktionsschritt. Durch Anlegen einer Spannung zwischen den Elektroden 12 und 13 wird die Reduktion erleichtert. Dabei kann der Transport von Sauerstoffionen durch das poröse Redoxmaterial 2 unterstützt werden. Insbesondere agieren die Elektroden 12 als Anode an denen elementaren Sauerstoff gebildet wird, der sich in dem rückseitigen Hohlraum 4 sammelt und über das Aluminiumoxidrohr 10 aus dem Reaktor entfernt wird. Die mechanische Pumpe 11 unterstützt das Entfernen des Sauerstoffs

In einem nächsten Schritt kühlt der Reaktor ab. Dabei wird Wärme vom Redoxmaterial 2 an das Wasserreservoir 7 zur Dampferzeugung/-überhitzung übertragen, so dass diese möglichst gut weitergenutzt wird. Die Ventile 9 werden geöffnet. Der Wasserdampf strömt dabei bereits in den Reaktionsraum und die Wasserspaltung beginnt. Fig. 12 zeigt das Abkühlen des Reaktors und die Weiternutzung der Wärme zur Dampferzeugung/-überhitzung.

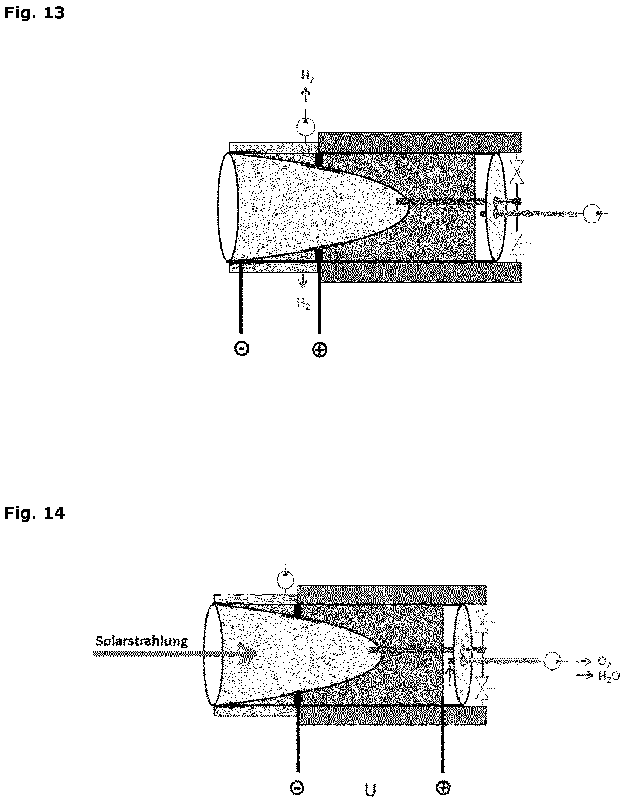

Durch Reaktion des Wasserdampfs mit dem Redoxmaterial 2 entsteht Wasserstoff, welcher insbesondere in der Kavität 3 freigesetzt wird. Der gebildete Wasserstoff wird durch den Protonenleiter 14 unter Anlegen einer Spannung zwischen den Elektroden 13 und 15 kontinuierlich aus dem Reaktionsgefäß entfernt, um so die Gleichgewichtslage in Richtung der Wasserspaltung zu verschieben. Insbesondere kann in der Kavität 3 gebildeter Wasserstoff an den Elektroden 13 zu Protonen oxidiert, durch den Protonenleiter 14 transportiert und an den Elektroden 15 erneut zu elementarem Wasserstoff reduziert werden. Fig. 13 zeigt die elektrochemisch unterstützte Wasserspaltung.

Durch Aufheizen des Reaktors mittels durch das Quartz-Fenster 5 einfallender Solarstrahlung wird das Redoxmaterial im Folgenden regeneriert (Fig. 14) und der Zyklus beginnt von neuem. Dabei werden die Ventile 9 geschlossen. Fig. 14 zeigt die Regeneration des Redoxmaterials 2.

Der Prozess von Beispiel 2 kann bei hohen Temperaturen (Reduktion über 1000 °C betrieben werden). Der Anteil an thermischer Energie ist dabei sehr hoch (über 40 %), und damit auch der theoretisch mögliche Wirkungsgrad von Sonnenenergie zu chemisch gespeicherter Energie. Allerdings sind die Herausforderungen an die verwendeten Materialien höher als in Beispiel 1, die Verluste durch Abwärme und Rückstrahlung sind ebenfalls höher, und die Wärmerückgewinnung gestaltet sich schwieriger, da unter Umständen Fest-Fest-Wärmetauscher nötig sind, um die bei der Oxidation freiwerdende Wärme zu übertragen beziehungsweise zu speichern.

Der Prozess kann überall verwendet werden, wo Wasserstoff oder Sauerstoff benötigt werden, vorzugsweise jedoch in Kombination mit Solarenergie. Die Produktion von Wasserstoff mit erneuerbaren Energien ist derzeit stark zunehmend. Effiziente Prozesse wie der hier gezeigte sind somit vielseitig gewerblich anwendbar.

**Patentansprüche**

1. Verfahren zur Gewinnung von Wasserstoff aus Wasser und/oder Kohlenstoffmonoxid aus Kohlenstoffdioxid, wobei die für die Spaltung des Wassers und/oder Kohlenstoffdioxids benötigte Energie sowohl in Form von Wärmeenergie als auch als elektrische Energie bereitgestellt wird, wobei der Anteil an Wärmeenergie 20% bis 80% des Gesamtenergiebedarfs beträgt, wobei das Verfahren die folgenden Schritte umfasst

   i. Reduktion eines sauerstoffhaltigen Redoxmaterials bei einer ersten Temperatur $T_{red}$ unter Bildung von Sauerstoff, gegebenenfalls unterstützt durch eine elektrische Spannung, welche die Sauerstoffionenleitung antreibt,
   ii. Oxidation des Redoxmaterials bei einer zweiten Temperatur $T_{ox}$ durch Reaktion mit Wasser und/oder Kohlenstoffdioxid unter Bildung von Wasserstoff und/oder Kohlenstoffmonoxid, wobei gegebenenfalls eine elektrische Spannung angelegt wird, die einen Anteil der zur Spaltung von Wasser und/oder Kohlenstoffdioxid benötigen Energie beiträgt,

   wobei die erste Temperatur $T_{red}$ höher ist als die zweite Temperatur $T_{ox}$ und wobei wenigstens in einem der Schritte i) und ii) eine elektrische Spannung angelegt wird.

2. Verfahren nach Anspruch 1, wobei der Anteil an Wärmeenergie 30% bis 70%, insbesondere 40% bis 60%, des Gesamtenergiebedarfs beträgt.

3. Verfahren nach Anspruch 1 oder 2, wobei das Verfahren bei einer maximalen Temperatur von weniger als 1800 °C, insbesondere weniger als 1500 °C, durchgeführt wird.

4. Verfahren nach Anspruch 1, wobei die erste Temperatur $T_{red}$ in einem Bereich von 400 bis 1800 °C liegt und die zweite Temperatur $T_{ox}$ in einem Bereich von 200 bis 1500 °C liegt.

5. Verfahren nach einem der Ansprüche 1 bis 4, wobei das sauerstoffhaltige Redoxmaterial ein Metalloxid, insbesondere ein Oxid des Eisen, Mangan, Cer, Zirkonium, Titan, Chrom, Nickel und Cobalt, deren Mischungen, oder ein Perowskit in der Form $ABO_3$ mit A=[Ca, Sr, La, Mg, Ba] und B=[Fe, Mn, Ni, Zr, Ce, Cr, Ti, Co, Sc V, Cu, Zn] sowie Komplexe Mischoxide mit mehreren A und B Komponenten aus dem genannten Pool umfasst.

6.  Verfahren nach einem der Ansprüche 1 bis 5, wobei eine elektrische Spannung in Schritt i) zwischen einer Anode und einer Kathode angelegt wird, wobei die Kathode und die Anode durch einen Elektrolyten, insbesondere durch das sauerstoffhaltige Redoxmaterial, sauerstoffionenleitend verbunden sind und wobei gegebenenfalls das sauerstoffhaltige Redoxmaterial mit der Kathode und dem Elektrolyten elektrisch leitend und sauerstoffionenleitend verbunden ist.

7.  Verfahren nach einem der Ansprüche 1 bis 6, wobei eine elektrische Spannung in Schritt ii) zwischen einer Anode und einer Kathode angelegt wird, wobei die Anode und die Kathode durch einen Elektrolyten, insbesondere ein sauerstoffionenleitendes oder protonenleitendes Material, ionenleitend verbunden sind und wobei gegebenenfalls die Anode mit dem sauerstoffhaltigen Redoxmaterial elektrisch leitend verbunden ist und.

8.  Verfahren nach einem der Ansprüche 1 bis 7, wobei das sauerstoffhaltige Redoxmaterial während des Verfahrens ortsfest ist und nicht transportiert wird.

9.  Vorrichtung zur Durchführung des Verfahrens nach einem der Ansprüche 1 bis 5, umfassend eine Anode, eine Kathode und einen ionenleitenden Elektrolyten, insbesondere einen Festelektrolyten, wobei der Elektrolyt zwischen der Anode und der Kathode angeordnet ist, und wobei die Anode und/oder der Elektrolyt ein sauerstoffhaltiges Redoxmaterial, insbesondere ein Metalloxid, umfassen.

10. Vorrichtung zur Durchführung des Verfahrens nach einem der Ansprüche 1 bis 5, umfassend einen Reaktionsraum enthaltend ein sauerstoffhaltiges Redoxmaterial, eine Vorrichtung zur direkten Beheizung des sauerstoffhaltigen Redoxmaterials in dem Reaktionsraum mit Sonnenstrahlung, eine Vorrichtung zur Zuführung von Wasser und/oder Wasserdampf zu dem sauerstoffhaltigen Redoxmaterial in dem Reaktionsraum, wobei der Reaktionsraum wenigstens zwei Hohlräume aufweist, die durch das sauerstoffhaltige Redoxmaterial voneinander getrennt sind, wobei ein erster Hohlraum eine Vorrichtung zur Entfernung von Wasserstoff und/oder Kohlenmonoxid aus dem Reaktionsraum und ein zweiter Hohlraum eine Vorrichtung zum Entfernen von Sauerstoff aus dem Reaktionsraum umfasst, wobei die Vorrichtung weiterhin wenigstens zwei Elektroden umfasst, die jeweils mit dem Redoxmaterial in Kontakt stehen, wobei eine Elektrode in dem ersten Hohlraum angeordnet ist und die andere Elektrode in dem zweiten Hohlraum.

11. Vorrichtung zur Durchführung des Verfahrens nach einem der Ansprüche 1 bis 5, umfassend einen Reaktionsraum enthaltend ein sauerstoffhaltiges Redoxmaterial, eine Vorrichtung zur direkten Beheizung des sauerstoffhaltigen Redoxmaterials in dem Reaktionsraum mit Sonnenstrahlung, eine Vorrichtung zur Zuführung von Wasser und/oder Wasserdampf zu dem sauerstoffhaltigen Redoxmaterial in dem Reaktionsraum, wobei der Reaktionsraum wenigstens zwei Hohlräume aufweist, die durch das sauerstoffhaltige Redoxmaterial voneinander getrennt sind, wobei ein erster Hohlraum eine Vorrichtung zum Entfernen von Sauerstoff aus dem Reaktionsraum umfasst, und wobei ein zweiter Hohlraum als Teil einer Wand des Reaktionsraums ein protonenleitendes Material zur Entfernung von Wasserstoff aus dem Reaktionsraum umfasst, wobei die Vorrichtung weiterhin wenigstens zwei Elektroden umfasst, wobei eine erste Elektrode innerhalb des zweiten Hohlraums mit dem protonenleitenden Material in Kontakt steht und eine zweite Elektrode außerhalb des Reaktionsraums mit dem protonenleitenden Material in Kontakt steht.

**Fig. 1**

**Fig. 2**

**Fig. 3**

Hochtemperaturelektrolyse

Thermochemische Kreisprozesse

Anteil Wärmeenergie (%)

**Fig. 4**

**Fig. 5**

**Fig. 6**

**Fig. 7**

**Fig. 8**

## Fig. 9

## Fig. 10

**Fig. 11**

Solarstrahlung

$O_2$

$\ominus$    U    $\oplus$

**Fig. 12**

$H_2O$

$H_2O$

$H_2O$

$H_2O$

**Fig. 13**

$H_2$

$H_2$

$\ominus$     $\oplus$

**Fig. 14**

Solarstrahlung

$\ominus$     U     $\oplus$

$\rightarrow O_2$
$\rightarrow H_2O$

Europäisches
Patentamt

European
Patent Office

Office européen
des brevets

**EUROPÄISCHER RECHERCHENBERICHT**

Nummer der Anmeldung

EP 21 16 9078

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/318979 A1 (CRONIN LEROY [GB] ET AL) 30. Oktober 2014 (2014-10-30) | 9-11 | INV. |
| A | * Absätze [0014] - [0017], [0022], [0023], [0030], [0033], [0035], [0060], [61.69], [0070], [0074], [0077], [0088], [0117], [0120]; Abbildung 1 * * Absätze [0123], [0131] - [0133], [0136] - [0138], [0142], [0168] - [0173], [0194], [0198], [0208], [0228] * | 1-8 | C01B3/04 C01B3/06 C01B13/02 C01B32/40 C25B1/00 C25C1/00 |
| | ----- | | |
| X | US 2011/048962 A1 (REECE STEVEN Y [US] ET AL) 3. März 2011 (2011-03-03) | 9 | |
| A | * Absatz [0116]; Abbildung 3 * | 1-8,10, 11 | |
| | ----- | | |
| X | JP S60 10566 A (TOSHIBA KK) 19. Januar 1985 (1985-01-19) * das ganze Dokument * | 9 | |
| | ----- | | RECHERCHIERTE SACHGEBIETE (IPC) |
| X,P | WO 2020/146754 A1 (UTILITY GLOBAL INC [US]) 16. Juli 2020 (2020-07-16) * Ansprüche 1,2,5,9,10,19,20 * | 9 | C01B C25C C25B |
| | ----- | | |
| X | US 2016/138175 A1 (DIVER JR RICHARD B [US] ET AL) 19. Mai 2016 (2016-05-19) | 1-7 | |
| A | * Absätze [0006], [0008], [0012], [0013], [0015], [0017]; Abbildung 1 * | 8-11 | |
| | ----- | | |
| | -/-- | | |

Der vorliegende Recherchenbericht wurde für alle Patentansprüche erstellt

| Recherchenort | Abschlußdatum der Recherche | Prüfer |
|---|---|---|
| München | 8. September 2021 | Werner, Håkan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 21 16 9078

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | MARTIN ROEB ET AL: "Materials-Related Aspects of Thermochemical Water and Carbon Dioxide Splitting: A Review", MATERIALS, Bd. 5, Nr. 11, 24. Oktober 2012 (2012-10-24), Seiten 2015-2054, XP055343289, CH ISSN: 1996-1944, DOI: 10.3390/ma5112015 | 1-7 | |
| A | * Seite 2017 * <br> * Seite 2035 * <br> * Seite 2037 * <br> * Seite 2040 * <br> ----- | 8-11 | |
| X | WO 2009/026640 A1 (COMMW SCIENT IND RES ORG [AU]; HINKLEY JAMES TREVOR [AU] ET AL.) 5. März 2009 (2009-03-05) | 1-4,7 | |
| A | * Seite 6, Zeilen 1-14; Abbildung 4; Beispiel 1 * <br> ----- | 5,6,8-11 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 8. September 2021 | Werner, Håkan |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

.........................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 21 16 9078

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-09-2021

| Im Recherchenbericht angeführtes Patentdokument | Datum der Veröffentlichung | Mitglied(er) der Patentfamilie | Datum der Veröffentlichung |
|---|---|---|---|
| US 2014318979 A1 | 30-10-2014 | CA 2854715 A1 | 16-05-2013 |
| | | CN 104053821 A | 17-09-2014 |
| | | EP 2776606 A1 | 17-09-2014 |
| | | JP 6101276 B2 | 22-03-2017 |
| | | JP 2014532812 A | 08-12-2014 |
| | | KR 20140093706 A | 28-07-2014 |
| | | US 2014318979 A1 | 30-10-2014 |
| | | WO 2013068754 A1 | 16-05-2013 |
| US 2011048962 A1 | 03-03-2011 | EP 2470690 A2 | 04-07-2012 |
| | | JP 2013503257 A | 31-01-2013 |
| | | US 2011048962 A1 | 03-03-2011 |
| | | US 2013118912 A1 | 16-05-2013 |
| | | WO 2011028262 A2 | 10-03-2011 |
| JP S6010566 A | 19-01-1985 | KEINE | |
| WO 2020146754 A1 | 16-07-2020 | KEINE | |
| US 2016138175 A1 | 19-05-2016 | US 2014102912 A1 | 17-04-2014 |
| | | US 2016138175 A1 | 19-05-2016 |
| | | WO 2013019167 A1 | 07-02-2013 |
| | | WO 2013019199 A2 | 07-02-2013 |
| WO 2009026640 A1 | 05-03-2009 | AU 2008291700 A1 | 05-03-2009 |
| | | WO 2009026640 A1 | 05-03-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **EBBESEN et al.** High Temperature Electrolysis In Alkaline Cells, Solid Proton Conducting Cells, and Solid Cells. *Chem. Rev.,* 2014, vol. 141 (21), 10697-10734
- **ZEDTWITZ et al.** The solar thermal gasification of coal - energy conversion efficiency and CO2 mitigation potential. *Energy,* 2003, vol. 28, 441-456
- **MUHICH et al.** Comparing the solar-to-fuel energy conversion efficiency of ceria and perovskite based thermochemical redox cycles for splitting H2O and CO2. *Int. J. Hydrog. Energy,* 2018, vol. 41, 18814-18831
- **VIETEN et al.** Materials design of perovskite solid solutions for thermochemical applications. *Energy Environ. Sci.,* 2019, vol. 12, 1369-1384
- *Gas Phase Thermochemistry Data,* 13. November 2019, https://web-book.nist.gov
- **BARIN, I.** Thermochemical Data of Pure Substances. 2008